# EUROPEAN PATENT APPLICATION

(11) **EP 1 187 414 A1**
(43) Date of publication of application: **13.03.2002**
(21) Application number: 01919916.5
(22) Date of filing: 12.04.2001
(51) Int. Cl.: H04L 29/00

(54) **DATA TRANSMISSION METHOD AND DATA TRANSMISSION APPARATUS**

(30) Priority: 12.04.2000 JP 2000111306; 14.06.2000 JP 2000178737
(71) Applicant: Sony Corporation, Tokyo 141-0001 (JP)
(72) Inventor: KAWAMURA, Harumi, Sony Corporation, Tokyo 141-0001 (JP)
(74) Representative: DeVile, Jonathan Mark, Dr.
(86) International application number: JP0103170
(87) International publication number: WO0178344

(57) **Abstract**

To facilitate high level transmission processing such as remote control of other devices by using wireless network such as short-distance wireless communication method or cable-based network capable of transmitting data bi-directionally, a command and its response of a specified type are transmitted through a channel set up in the network between one device and the other device connected to a specified wireless communication network. Then, a side receiving a command through the channel executes an action specified by that command.

## Description

### TECHNICAL FIELD

The present invention relates to a data communication method preferable for application to, for example, a short-distance wireless communication system and a data transmitting apparatus employing this data communication method and more particularly to technology preferable for processing for carrying out wireless communication or cable-based transmission between audio devices or video devices.

### BACKGROUND ART

In recent years, wireless communication system based on a standard called Bluetooth (Bluetooth: trade mark) has been proposed and prevailing in actual fields. According to this wireless communication system, telephone communication audio data, facsimile image data, computer data and the like are transmitted among plural devices using a frequency band of 2.4 GHz.

This is a short-distance wireless communication system in which a relatively short-distance network is assumed while its wireless communication distance among devices is from some m to about 100 m max. This short-distance wireless communication system accommodates profiles which specify how the data transmission is carried out for each data type to be transmitted. The detail of the communication system will be described in the best mode for carrying out the invention and has been already publicized in Bluetooth SIG, which is a standardization organization.

Although according to the wireless communication standard of Bluetooth already proposed, building up of a network by transmitting various kinds of data has been expected, remote control of other device on the network from a specific device is not expected and this is a problem which cannot be solved currently.

Although an example of the network based on a wireless communication standard called Bluetooth has been described here, the same problem exists in case of constructing a similar wireless communication network or cable-based transmission network.

### DISCLOSURE OF THE INVENTION

An object of the present invention is to facilitate remote control of other device and high-level transmission processing such as investigation about the status of other device using wireless or cable-based transmission network.

According to a first aspect, there is provided a data communication method for transmitting a command and a response thereof of a specified type between a device and other device, capable of transmitting data bi-directionally in a specified transmission network through a first channel in the network, wherein a side receiving the command executes an action instructed by the command. Consequently, for example, a device which transmits a command is capable of controlling a device which receives that command located at a remote place with reference to a response therefrom, securely. Thus, a high-level device control is achieved using for example, a short-distance wireless network.

According to a second aspect, there is provided a data communication method according to the first aspect wherein a code for specifying the network is attached to data of the command and response. Consequently, the present invention can be applied to existing various kinds of wireless communication networks and cable-based networks easily.

According to a third aspect, there is provided a data communication method according to the second aspect wherein data by type to control is attached to data of the command and response. Consequently, various kinds of control can be achieved. For example, by providing data about transmission setup of stream data and data about device control as the data by type to control, various kinds of setup of stream data and various kind of device control can be executed securely.

According to a fourth aspect, there is provided a data communication method according to the third aspect wherein as the data by type to control, data about transmission setup of stream data and data about device control exist. Consequently, transmission setup of stream data and device control can be instructed accurately.

According to a fifth aspect, there is provided a data communication method according to the fourth aspect wherein when data about transmission setup of stream data is attached and transmission of stream data is instructed, transmission of an appropriate stream data is carried out through a second channel in the network. Consequently, the command/response and stream data can be transmitted through each independent channel, so that each of the transmissions can be carried out securely.

According to a sixth aspect, there is provided a data transmitting apparatus connected to a specified wireless or cable-based transmission network, comprising: a control means for generating a command and a response of a specified type; and a transmitting means for transmitting a descriptor type command and response generated by the control means through a first channel of the network. Consequently, by constructing a wireless communication network with this data transmitting apparatus, remote control in the network by transmitting a command can be carried out securely while checking with a response, so that a high-level remote control of a device can be executed.

According to a seventh aspect, there is provided a data transmitting apparatus according to the sixth aspect wherein a code for specifying a network is attached to data of a command or a response generated by the control means. Consequently, the present invention can be applied to a data transmitting apparatus of existing various kinds of wireless communication networks or a data transmitting apparatus of cable-based transmission network easily.

According to an eighth aspect, there is provided a data transmitting apparatus according to the seventh aspect wherein data by type to control is attached to data of a command or a response generated by the control means. Consequently, various kinds of controls are enabled by this data transmitting apparatus.

According to a ninth aspect, there is provided a data transmitting apparatus according to the eighth aspect wherein data by type to control generated by the control means is any one of two types of data, data about transmission setup of stream data and data about device control. Consequently, various kinds of transmission setup of stream data and various kinds of device controls can be executed securely.

According to a tenth aspect, there is provided a data transmission apparatus according to the ninth aspect wherein when data about transmission setup of stream data is attached to data of the command or the response generated by the control means, the transmission of stream data is instructed and then a setup based on the instruction is completed, the transmitting means executes transmission of stream data through the second channel of the network. Consequently, the transmission of the command or the response and the transmission of stream data can be transmitted through the independent channel, and each transmission can be executed securely.

### BRIEF DESCRIPTION OF DRAWINGS

FIG. 1 is an explanatory diagram showing an example of transmission condition according to an embodiment of the present invention;
FIG. 2 is a block diagram showing an example of a reproducing apparatus according to an embodiment of the present invention;
FIG. 3 is a block diagram showing an example of a head mount display according to an embodiment of the present invention;
FIG. 4 is a block diagram showing an example of structure of a wireless transmitting portion according to an embodiment of the present invention;
FIG. 5 is an explanatory diagram showing an example of protocol stack;
FIG. 6 is an explanatory diagram showing an example of hierarchical structure of wireless communication;
FIG. 7 is an explanatory diagram showing an example of setting of communication frequency;
FIG. 8 is an explanatory diagram showing a frequency hopping condition;
FIG. 9 is an explanatory diagram showing an example of single slot packet arrangement according to time axis;
FIG. 10 is an explanatory diagram showing an example in which single-slot packets and multi-slot packets are mixed according to time axis;
FIG. 11 is an explanatory diagram showing an example of transmission between the master and slave;
FIG. 12 is an explanatory diagram showing an example of network structure;
FIG. 13 is a timing diagram showing an example of communication with SCO link;
FIG. 14 is a timing diagram showing an example of communication based on asynchronous communication method;
FIG. 15 is a timing diagram showing an example of communication based on isochronous communication method;
FIG. 16 is a timing diagram showing an example of communication based on broadcast communication method;
FIG. 17 is a timing diagram showing an example of communication in case where SCO link and ALC link are used together;
FIG. 18 is an explanatory diagram showing an example of structure of clock data;
FIG. 19 is an explanatory diagram showing an example of structure of address;
FIG. 20 is a structure diagram showing an example of generation processing of frequency hopping pattern;
FIG. 21 is an explanatory diagram showing an example of packet format;
FIG. 22 is an explanatory diagram showing an example of structure of access code;
FIG. 23 is an explanatory diagram showing an example of structure of packet header;
FIG. 24 is an explanatory diagram showing an example of structure of payload;
FIG. 25 is an explanatory diagram showing an example of structure of the payload header in a single slot packet;
FIG. 26 is an explanatory diagram showing an example of structure of the payload header in a multi-slot packet;
FIG. 27 is an explanatory diagram showing an example of payload of FHS packet;
FIG. 28 is an explanatory diagram showing an example of condition transition of devices;
FIG. 29 is an explanatory diagram showing an example of communication for inquiry;
FIG. 30 is a timing diagram showing an example of inquiry processing;
FIG. 31 is an explanatory diagram showing an example of call communication;
FIG. 32 is a timing diagram showing an example of call processing;
FIG. 33 is an explanatory diagram showing an example of hierarchical structure of AV/C protocol;
FIG. 34 is an explanatory diagram showing an example of structure of packet in the AV/C protocol;
FIG. 35 is an explanatory diagram showing examples of building of a connection with the AV/C protocol and transmission of command and response;
FIG. 36 is an explanatory diagram showing an example of release connection based on the AV/C protocol;
FIG. 37 is an explanatory diagram showing an example of data structure of the AV/C protocol;
FIG. 38 is an explanatory diagram showing an example of commands;
FIG. 39 is an explanatory diagram showing an example of command and response;
FIG. 40 is an explanatory diagram showing an example of command configuration;
FIG. 41 is an explanatory diagram showing an example of bus ID;
FIG. 42 is an explanatory diagram showing an example of structure of bus ID dependent field;
FIG. 43 is an explanatory diagram showing an example of control category;
FIG. 44 is an explanatory diagram showing an example of structure of stream setup;
FIG. 45 is an explanatory diagram showing an example of function type;
FIG. 46 is an explanatory diagram showing an example of data of each function type; and
FIG. 47 is an explanatory diagram showing an example of parameter category.

### BEST MODE FOR CARRYING OUT THE INVENTION

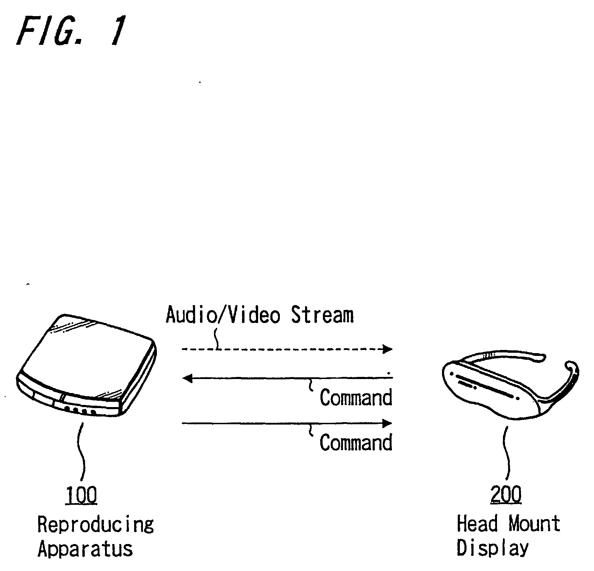

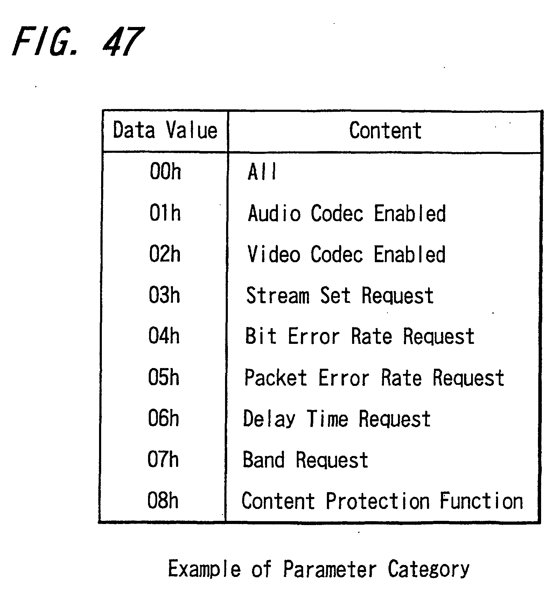

Hereinafter, an embodiment of the present invention will be described with reference to FIGS. 1 to 47.

According to the present invention, a wireless communication method standardized based on the Bluetooth norm is applied to system in which a wireless network is built among plural devices. Here, the system is constructed with mainly electronic devices such as audio-video devices.

FIG. 1 is a diagram showing the system structure of this example and here, the system is constructed with a disc reproducing apparatus 100 for reproducing a disc such as DVD (Digital Video Disc or Digital Versatile Disc) in which video data and audio data are recorded and a head mount display 200 which is mounted on user's head portion like glasses. Audio stream and video stream reproduced from a disc by the disc reproducing apparatus 100 is transmitted to the head mount display 200 by stream transmission based on Bluetooth. According to this example, in addition to the wireless communication of this stream, a command for carrying out various kinds of instructions such as operation of a display 200 is transmitted from for example, the disc reproducing apparatus 100 to the display 200 and then, a response to that command is transmitted from the display 200 to the disc reproducing apparatus 100. The detail of the instruction with the command will be described later.

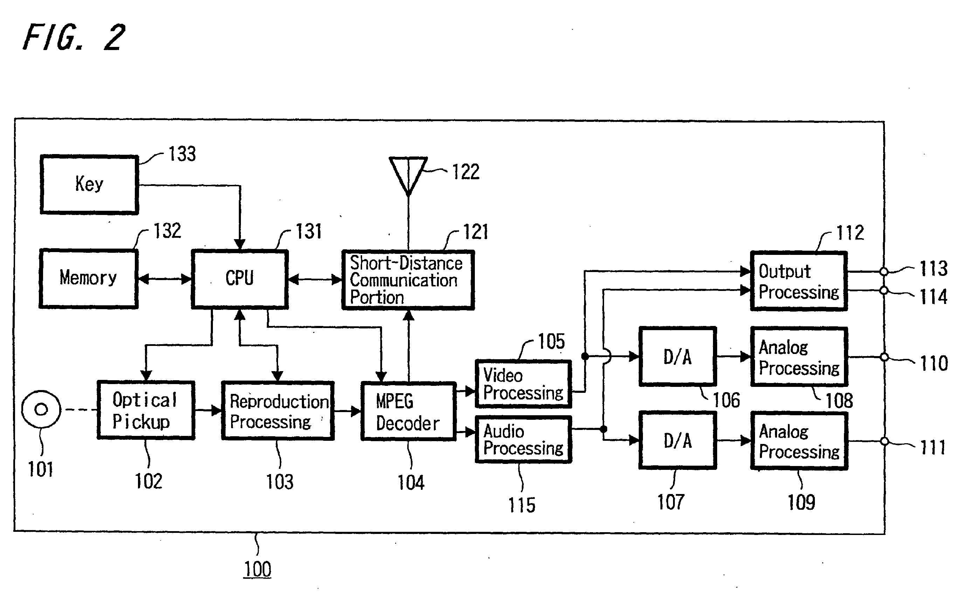

The structure of the disc reproducing apparatus 100 is, for example, shown in FIG. 2. A disc 101 loaded on the disc reproducing apparatus 100 is rotated with a spindle motor (not shown), so that a recording signal is read out by an optical pickup 102. This read out signal (reproduction signal) is subjected to reproduction processing by a reproduction processing portion 103 so as to extract video data and audio data. Here, the video data and audio data are recorded as a packet data which is compression coded based on the MPEG (Moving Picture Excess Group) method in the disc 101. Reproduced MPEG packet is supplied to an MPEG decoder 104.

The MPEG decoder 104 decodes video data and audio data based on the MPEG method. Video data decoded by the MPEG decoder 104 is supplied to a video processing portion 105, in which data is subjected to necessary video data processing upon reproduction. The processed video data is converted to analog video signal by a digital/analog converter 106. After the converted analog video signal is subjected to analog processing such as amplification by an analog processing portion 108, it is supplied to an analog video output terminal 110.

Further, audio data decoded by the MPEG decoder 104 is supplied to an audio processing portion 115 so as to carry out audio data processing required upon reproduction and the processed audio data is converted to analog audio signal by the digital/analog converter 107. After the converted analog audio signal is subjected to analog processing such as amplification by an analog processing portion 109, it is supplied to an analog audio output terminal 111.

Video data and audio data decoded by the MPEG decoder 104 may be subjected to processing for outputting as digital data by a digital output processing portion 112 and outputted from a digital video output terminal 113 and a digital audio output terminal 114 as digital data. Meanwhile, it is permissible to output video data and audio data from a single output terminal as single-system data. Further, it is also permissible to provide a digital serial bus line based on the IEEE (The Institute of Electrical and Electronics Engineers) 1394 system with an interface for outputting video data and audio data.

The disc reproducing apparatus 100 of this example may be provided with a short-distance wireless communication portion 121 for carrying out wireless communication based on Bluetooth for the MPEG packet obtained by the MPEG decoder 104 to be subjected to a transmission processing by this short-distance wireless communication portion 121 and transmitted by wireless from a connected antenna 122. Further, the MPEG packet received by the short-distance wireless communication portion 121 may be supplied to the MPEG decoder 104.

The operation of each component of the disc reproducing apparatus 100 of this example is so constructed as to be controlled by a central processing unit 131. The short-distance wireless communication portion 121 is also so constructed as to be controlled by a central processing unit 132. A memory 132 is connected to this central processing unit 131 and data necessary for reproduction operation control and data necessary for communication control in the short-distance wireless communication portion 121 are stored therein preliminarily. Data necessary for temporary storage during operation control or communication control is stored in the memory 131 as required.

The short-distance wireless communication portion 121 is capable of transmitting a command for investigating control or status of other device and a response to a command from other device. Further, when the short-distance wireless communication portion 121 receives a command or a response from other device, the received data is supplied to the central processing unit 131 and corresponding processing is executed by the central processing unit 131. The detail about the processing for transmitting and receiving the command or response will be described later.

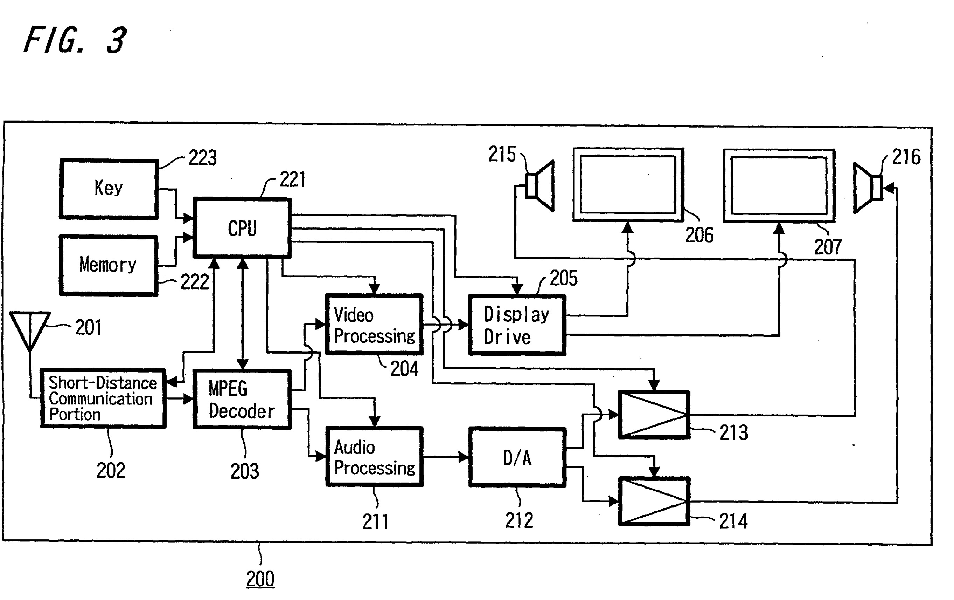

FIG. 3 is a diagram showing an example of the structure of the head mount display 200. The head mount display 200 of this example is provided with a short-distance wireless communication portion 202 for carrying out wireless communication based on Bluetooth and an antenna 201 is connected to this short-distance wireless communication portion 202. When the short-distance wireless communication portion 202 receives an MPEG packet, the received MPEG packet is supplied to an MPEG decoder 203, in which video data and audio data based on the MPEG method are decoded.

Video data decoded by the MPEG decoder 203 is supplied to a video processing portion 204, in which video data processing necessary for display is carried out and the processed video data is supplied to a display driver 105, in which a picture based on the video data is displayed on two display panels 206, 207. The display panels 206, 207 are constructed with relatively small liquid crystal picture display panels, for example. When the head mount display 200 is loaded on user's head portion, they are disposed so that a picture displayed on one display panel 206 is displayed in front of the left eye while a picture displayed on the other display panel 207 is displayed in front of the right eye.

Audio data decoded by the MPEG decoder 203 is supplied to an audio processing portion 211, in which it is subjected to audio data processing necessary upon audio output. The processed audio data is supplied to the digital/analog converter 121 and converted to analog audio signal of two channels for the left channel and the right channel. After the converted analog video signal of each channel is amplified with the amplifiers 213, 214, it is supplied to speakers 215, 216 for each channel and then outputted. When the head mount display 200 is loaded on user's head portion, it is so disposed that the speaker 215 for the left channel is located in the vicinity of the left ear while the speaker 216 for the right channel is located in the vicinity of the right ear.

The operation of each component of the head mount display 200 is so constructed as to be controlled by a central processing unit 221. Communication through the short-distance wireless communication portion 202 is also controlled by the central processing unit 221. A memory 222 is connected to this central processing unit 221, and data necessary for control of video display operation and audio output operation and data necessary for communication control through the short-distance wireless communication portion 202 are stored therein preliminarily. Further, data required to be stored temporarily during operation control or communication control is stored in the memory 222 as required.

Based on control of the central processing unit 221, the short-distance wireless communication portion 202 is capable of transmitting a command for investigating control status of other device and a response to a command from other device. When the short-distance wireless communication portion 202 receives a command or a response from other device, the received data is supplied to the central processing unit 221 and the central processing unit 221 executes corresponding processing. The detail about processing for transmitting and receiving this command and response will be described later.

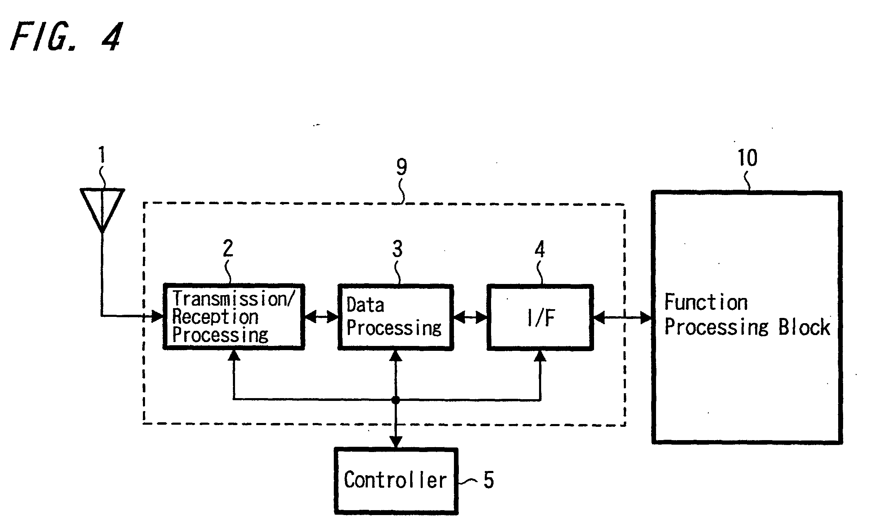

FIG. 4 is a diagram showing an example of the structure of the short-distance wireless communication portions 121 and 202 included in the disc reproducing apparatus 100 and the head mount display 200. A transmission/receiving portion 2 to which an antenna 1 is connected carries out high frequency signal processing so as to execute wireless communication processing and wireless reception processing. A signal to be transmitted and received by the transmission/receiving portion 2 is sent through a channel set up at an interval of 1 MHz in a band of 2.4 GHz. A signal of each channel is subjected to processing called frequency hopping which changes transmission frequency with a slot interval which will be described later. If it is assumed that the frequency hopping is carried out for each slot, it comes that the frequency is changed 1600 times for a second because a slot takes 625 µseconds, so as to prevent an interference with other wireless communication. As a modulation method for wireless communication signal, a modulation method called GFSK (Gaussian filtered FSK) is applied. This modulation method is a frequency shift modulation method in which the frequency transmission characteristic is restricted in terms of band by a Gaussian distribution low-pass filter.

A signal received by the transmission/receiving portion 2 and a signal to be transmitted by the transmission/receiving portion 2 is subjected to base band processing by the data processing portion 3. Basically, to the Bluetooth norm is applied TDD (Time Division Duplex) system in which transmission and reception are carried out alternately and the data processing portion 3 executes transmission slot processing and reception slot processing alternately.

A function processing block 10 is connected to the data processing portion 3 through an interface portion 4, so that received data is supplied to the function processing block 10 or data transmitted from the function processing block 10 is processed to be a transmission slot by the data processing portion 3. Processing for transmission by the transmission/receiving portion 2, the data processing portion 3 and the interface portion 4 is controlled under control of a controller 5. As this controller 5 may be used, for example, the central processing units 131, 221 incorporated in each device. It is permissible to use a dedicated controller prepared for short-distance wireless communication as well as the central processing units.

The transmission/receiving portion 2, the data processing portion 3 and the interface portion 4 constitute a short-distance wireless communication portion 9 for carrying out communication based on Bluetooth, and in case of the devices 100, 200, this corresponds to the short-distance wireless communication portions 121, 202.

The function processing block 10 connected to this short-distance wireless communication portion 9 corresponds to a portion for executing an actual function of the device. For example, in the disc reproducing apparatus 100, it corresponds to the structure for obtaining an MPEG packet by reproducing from a disc. In the head mount display 200, it corresponds to the structure for executing processing for decoding video data and audio data so as to display on the display or output from a speaker.

The short-distance wireless communication portion 9 may be incorporated in such a device as the disc reproducing apparatus 100 or the head mount display 200 or may be constructed with an independent unit and connected externally.

Next, a processing for executing wireless communication with other device based on the Bluetooth method using the short-distance wireless communication portion mounted on each device will be described later.

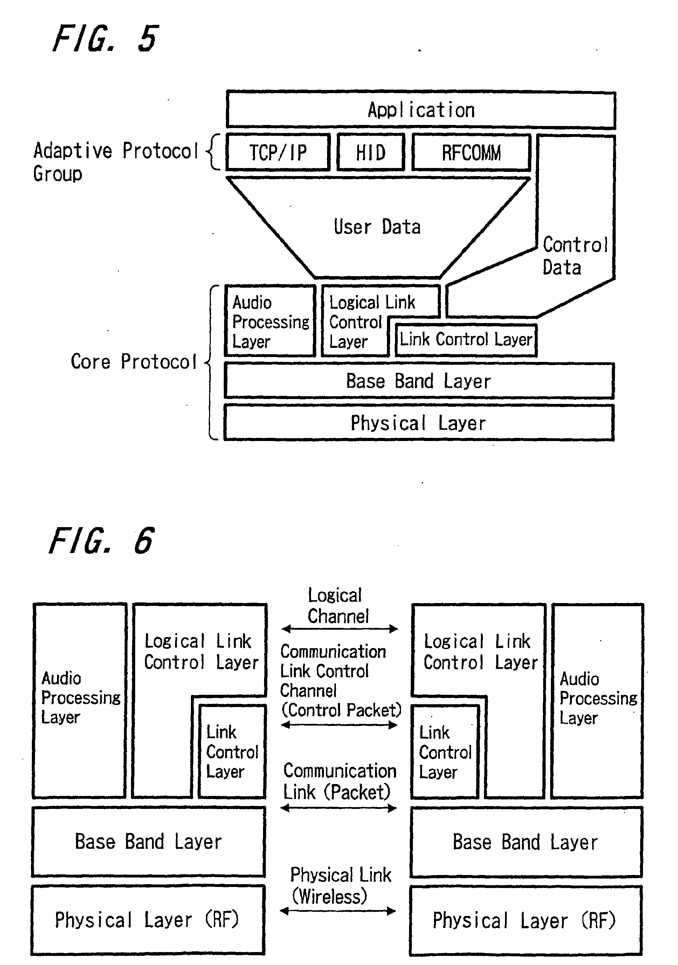

FIG. 5 is a diagram showing a protocol stack necessary for carrying out wireless communication based on Bluetooth. The protocol for the entire system of Bluetooth is divided to core protocol, which is a major portion of the protocol of Bluetooth, application software which executes application service and adaptive protocol group for matching communication protocols between the core protocol and application.

The protocol of the Bluetooth core is composed of five protocols or comprised of physical layer, base band layer, actual data processing layer and logical link control layer, provided successively from the bottom layer.

The adaptive protocol group adapts the core protocol to application software so that various kinds of existing applications can be applied. This adaptive protocol group includes, for example, TCP/IP protocol, RFCOMM protocol for emulating serial port, a driver of a device (HID: Human Interface Device) which user operates and the like. For transmission of the AV/C data, which will be described later, a protocol which adapts a profile corresponding to this adaptive protocol group is prepared. The structure of a protocol necessary for transmitting the AV/C data will be described later.

As the physical layer, frequency hopping type spectrum diffusion method using a frequency band of 2.4 GHz is employed. Transmission power is restricted to about 100 mW maximum, assuming a wireless communication over a short-distance of about 100 m. Further, this physical layer allows transmission power to be reduced to - 30 dBm minimum by control from the link layer.

The base band layer is defined as a protocol for interfacing actual transmission/reception data packets with the physical layer. This layer provides a communication link for transmitting/receiving data sent from a higher layer. At this time, control of the frequency hopping and control of the time axis slot are carried out. Further, processings for resending a packet, error correction and error detection are controlled by this base band layer.

The link control layer is a protocol for interfacing the transmission/reception packets on communication link, which specifies setting of communication link to the base band layer or setting of various communication parameters relating to that link. Those are defined in the link control layer as control packet and communicate with a link control layer of an opposing terminal as required. This layer receives direct control from higher level application as required.

In the audio layer, audio data is exchanged after a communication link allowing the link control layer to transmit or receive data is set up. The audio data mentioned here refers to mainly audio data for communication through telephone, and a dedicated processing layer is provided at a relatively lower level layer in order to suppress data transmission delay to a minimum limit when communicating through wireless telephone or the like.

The logical link control layer is a protocol for interfacing with the link control layer and the base band layer so as to control the logical channel. Other transmission data than audio data which the audio layer handles is provided from a high level application to the logical link layer and actual data which is exchanged there is exchanged without considering the size and timing of the data packet transmitted/received in the base band layer. For the reason, the logical link control layer controls data of the high level application as logical channel so as to carry out data division and data reconstruction.

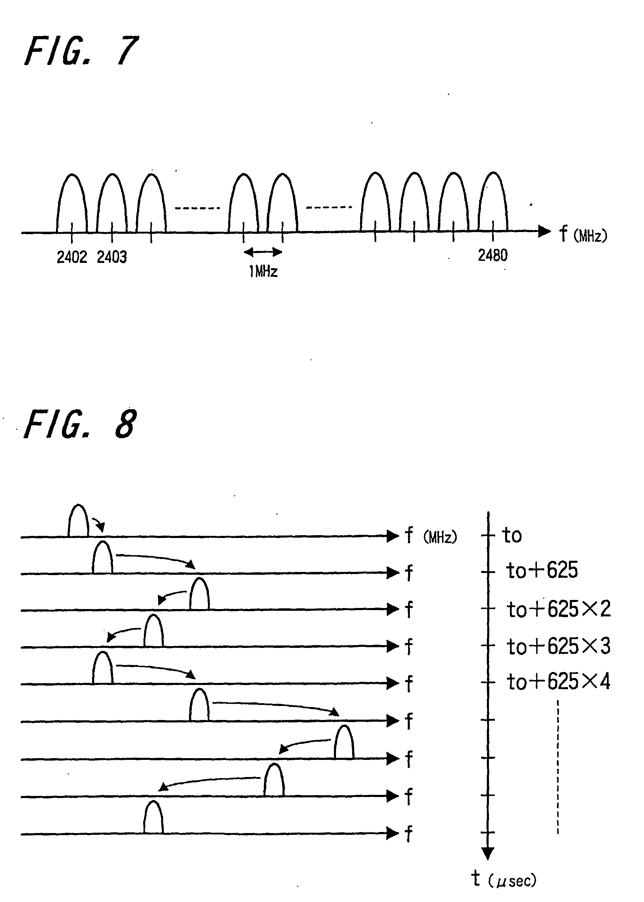

FIG. 6 shows a processing at each layer when wireless communication is carried out between two devices. A physical wireless communication line link is set up in the physical layer and transmission/reception of the packet is carried out through a link set up in the base band layer. In the link control layer, transmission and reception of control packet is carried out through a communication link control channel. In the logical link control layer, transmission and reception of user data packet is carried out through logical channel. This user data corresponds to stream data or command which is to be transmitted.

Next, physical communication frequency set-up processing upon wireless communication based on this method will be described. FIG. 7 is a diagram showing the frequency for use based on this method and as shown in FIG. 7, there are 79 communication frequencies at an interval of 1 MHz from 2402 MHz to 2480 MHz. Each packet to be transmitted occupies a single transmission spectrum in these 79 transmission frequencies. Then, the transmission spectrum for use changes (hopping) every 625 µseconds.

FIG. 8 shows an example of this communication frequency hopping, in which the communication frequency changes at random every 625 µseconds from a specific timing t₀. If the communication frequency changes every 625 µseconds, the hopping occurs about 1600 times for a second at random, so that it is diffused within a band shown in FIG. 7 and transmitted, indicating that the spectrum diffusion is being caused.

In case of Bluetooth, a unit of the packet is 625 µseconds. Plural units of the packet may be used continuously to carry out transmission. For example, when bi-directional transmission is carried out between two devices, communications of both directions do not have to use the same quantity of the packets and in some cases, plural packets may be used for communication only in one direction.

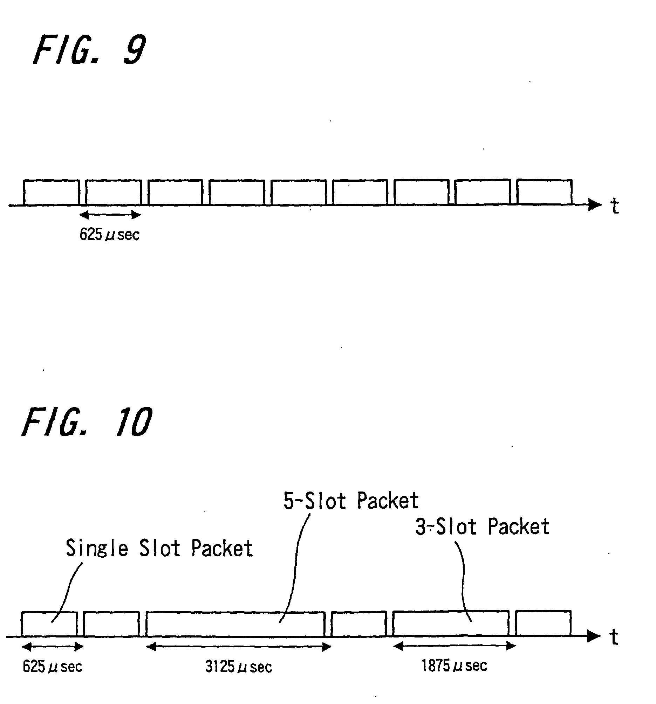

If all packets to be transmitted are packets of 625 µseconds as shown in FIG. 9, frequency hopping occurs every 625 µseconds as shown in FIG. 8. Contrary to this, in case where as shown in FIG. 10, three packets are used continuously or five packets are used continuously, transmission frequency is fixed while that slot continues.

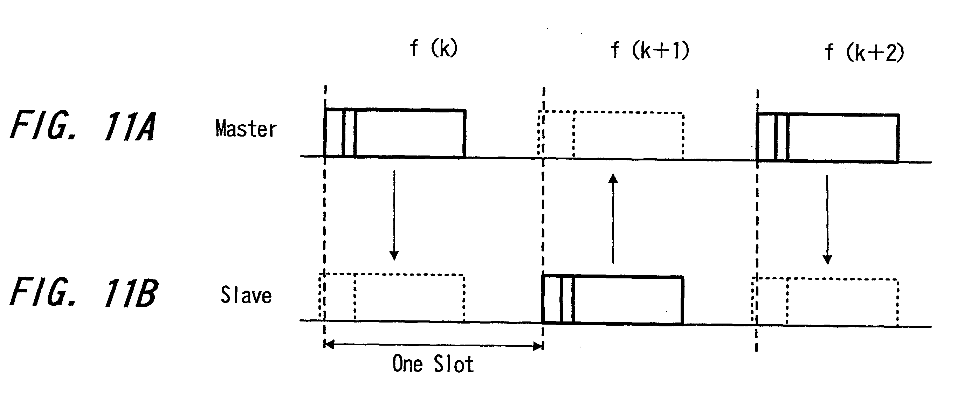

FIG. 11 shows communication status between two devices. When one device for carrying out wireless communication is assumed to be a master while the other is assumed to be a slave, data of slot configuration is sent from the master to the slave in the period of a slot (625 µseconds) (FIG. 11A) and in a next slot period, data of slot configuration is sent from the slave to the master (FIG. 11B). Hereinafter, the alternate transmission is repeated as long as the transmission continues. The frequency for wireless communication is changed such that the frequency is f(k), f(k+1), f(k+2), ...at every slot as described above.

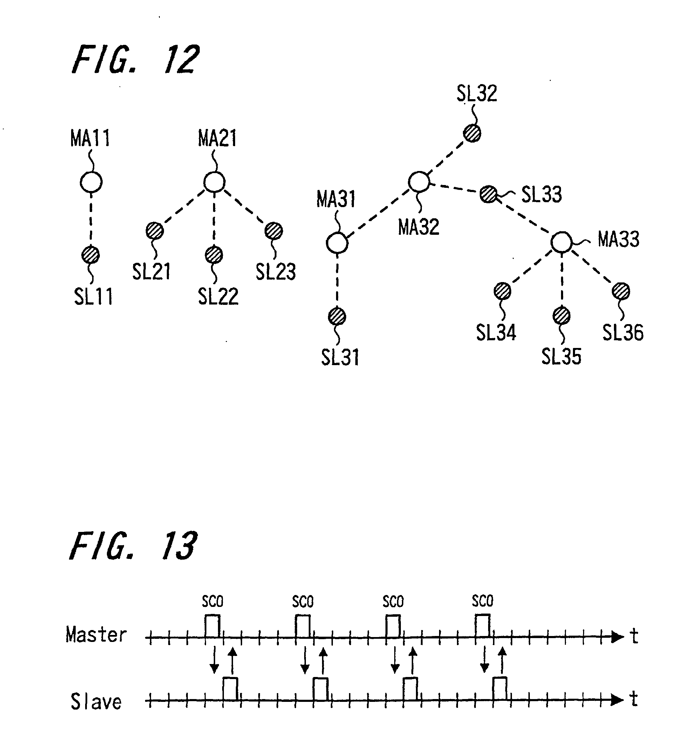

FIG. 12 is a diagram showing an example of the network structure composed of plural devices. In a communication system standardized according to Bluetooth, its network may be constructed with not only one-to-one wireless communication, but also with plural devices. That is, in case where wireless communication is carried out between two devices, one device serves as the master while the other device serves as the slave as shown in the left end of FIG. 12, so that bi-directional wireless communication is executed between a master MA11 and a slave SL11 under control of the master MA 11. As shown in the center of FIG. 12, it is permissible to prepare three slaves SL21, SL22, SL23 controlled by, for example, a single master MA 21 so that the network is constructed so as to carry out wireless communication among these four devices. Further, as shown on the right end of FIG. 12, it is permissible to prepare three masters MA 31, MA32, MA 33 and slaves SL31, SL32, SL33, SL34, SL35, SL 36 controlled independently by each master, construct three networks and then connect these three networks so as to expand the network configuration. In any case, direct communication cannot be executed between the slaves but communication is always executed through the master.

Meanwhile, a network comprised of a master and a slave directly communicating with that master is called pico-net. A network group having plural masters (that is, a network group comprised of plural pico-nets) is called a caster net.

Next, the kinds of links for carrying out communication between devices based on Bluetooth will be described. Bluetooth includes two kinds of the links, SCO (Synchronous Connection-Oriented) link and ACL (Asynchronous Connection-Less) link, which can be used separately depending on the purpose of application.

The SCO link is a connection type which executes one-to-one communication between the master and a specific slave and is so-called call switching type link. This link is used for an application in which real-time performance is required about mainly audio performance. In this SCO link, a communication slot is assured preliminarily at a specified interval on communication link within the pico-net and even if other data transmission occurs halfway, data transmission by the SCO link is taken as precedence. That is, as shown in FIG. 13, for example, SCO communication slot is transmitted alternately at a specified interval between the master and the slave.

This SCO link can support three SCO links at maximum corresponding to a single master at the same time. In this case, three SCO links may be supported by a slave or a SCO link may be supported for each of different three slaves. Meanwhile, the SCO link has no resending function, and no error correction code is attached to a packet to be transmitted through the SCO link.

The ACL link is so-called packet switching type connection type, which enables 1-to-multiple communication between the master and plural slaves. Although it is capable of communicating with any slave in the pico-net, effective communication speed of each slave may be changed depending on data quantity or the number of slaves. The SCO link and the ACL lank may be used mixedly.

The ACL link allows a single master to communicate with up to seven slaves at the same time. However, the ACL link which can be set up to each slave within a pico-net is only one and a slave cannot set up plural ACL links at the same time. To activate plural applications with a single slave, it is necessary to protocol-multiplex a higher level application. Unless specified specially, ACL packet of single slot is used for communication between the master and the slave. For the slave to transmit the ACL packet of multi-slot, permission from the master is needed in advance. Although the master can reject a request for transmission of the ACL packet of the multi-slot from the slave, the slave always must receive a request for transmission from the master.

The master notifies the slave of only an upper limit value of the multi-slot and whether or not the ACL packet of the multi-slot should be transmitted depends upon determination of the slave. On the other hand, because whether the ACL packet sent from the master is single slot or multi-slot depends completely on the determination of the master, the slave needs to always prepare for receiving all the multi-slot packet.

The ACL packet is provided with the following three packet communication methods irrespective of definitions of the single slot and multi-slot. The first one is an asynchronous communication method (asynchronous transfer), the second one is an isochronous communication method (isochronous transfer) and the third one is a broadcast communication method (Broadcast transfer).

The asynchronous communication method is a communication method for transmitting/receiving an ordinary packet. Data transmission speed is changed depending on traffic amount of slaves existing in the pico-net and packet resending due to deterioration of communication line quality.

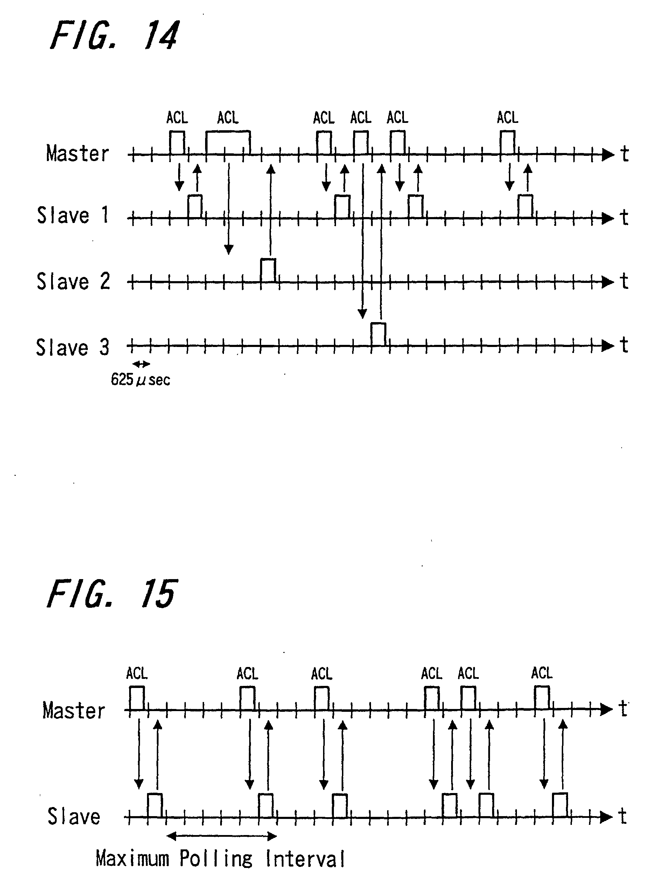

FIG. 14 shows a case where three slaves (slaves 1, 2, 3) in the same pico-net communicates according to the asynchronous communication method. The ACL packet is transmitted from the master to the respective slaves 1, 2, 3 in succession and each slave receiving the ACL packet resends a packet for confirming the reception to the master.

Meanwhile, stream data such as audio data and video data may be sometimes transmitted according to the asynchronous communication method of the ACL packet. In case of transmitting stream data according to the asynchronous communication method, a time stamp is attached to each ACL packet so as to secure continuity of stream data on the reception side.

According to the isochronous communication method, a packet is always transmitted from the master to the slave within the period of a predetermined time slot. This method allows to secure a minimum delay of data to be transmitted. In case of isochronous communication, the slot interval needs to be agreed as maximum polling time, between the master and the slave before communication based on the isochronous communication method is started.

The master can specify the maximum polling interval to the slave forcibly and reject a request for setting the isochronous communication method from the slave. However, the slave cannot specify the maximum polling interval to the master or make a request for setting isochronous communication.

FIG. 15 shows a case for carrying out communication between the master and the slave according to the isochronous communication method. As shown in FIG. 15, the ACL packet is transmitted from the master to the slave and just after receiving the ACL packet, the slave resends a packet for reception confirmation to the mater.

The broadcast communication method is set up by setting a slave identifier in the packet header to zero. Consequently, the broadcast communication packet can be sent from the master to all the slaves. A slave receiving the same packet does not transmit a packet for reception confirmation corresponding thereto. Although the slave does not confirm the reception, the master transmits broadcast communication packet continuously several times. The master needs to notify all the slaves of the frequency of the transmissions of plural times prior to broadcast communication.

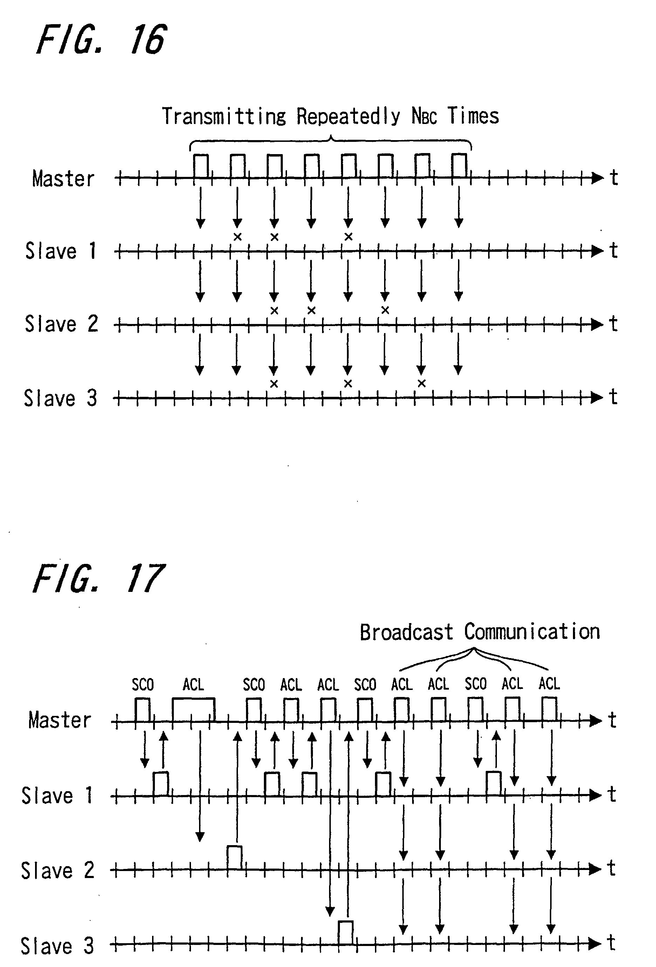

FIG. 16 shows an example of communication to all the slaves in the pico-net according to the broadcast communication method. When receiving a packet by the slave, a point marked with X in FIG. 16 indicates an example in which the slave cannot receive a packet and by transmitting NBC times repeatedly, broadcast communication can be carried out to all the slaves securely.

FIG. 17 is a diagram showing an example of communication using both the SCO link and ACL link. In this example, the SCO packet is transmitted through the SCO link between the master and the slave 1 at a predetermined cycle. The ACL packet is transmitted from the master to three slaves 1, 2, 3 as required. Further, the broadcast communication packet is also transmitted repeatedly predetermined times. When a timing for sending the SCO packet arrives while this broadcast communication packet is being transmitted repeatedly, the SCO packet is transmitted.

Setting parameters required for isochronous communication and broadcast communication are shown in Table 1.

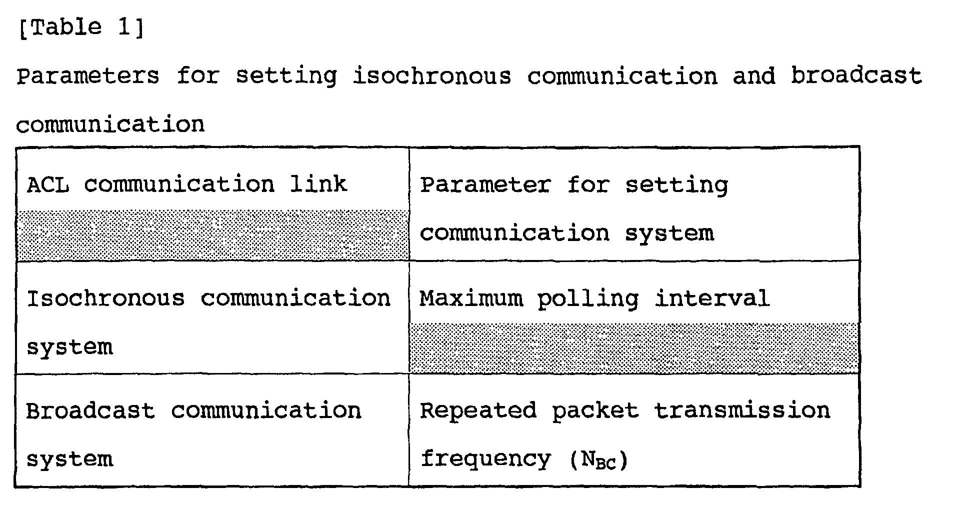

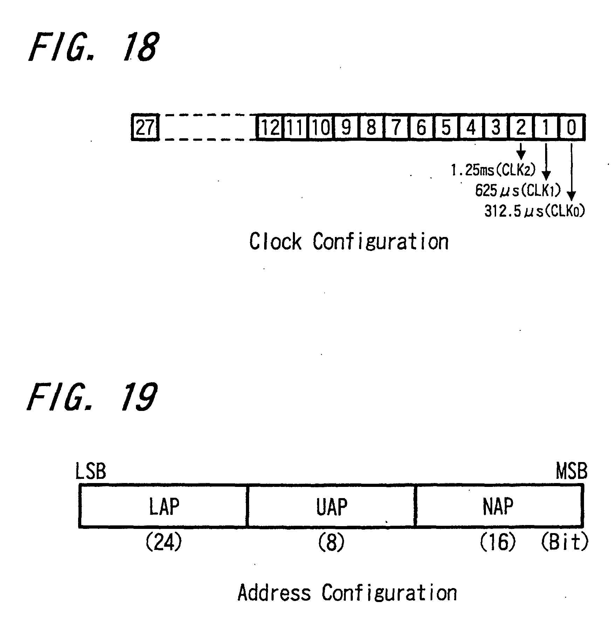

Next, the clock inside the master and slave will be described. According to this communication system, each device uses an internal clock so as to set up a frequency hopping pattern and the like. The clock possessed by the master and the slave is set up with a count value of, for example, a 28-bit counter of 0 to 27 as shown in FIG. 18. A single clock of this counter is 312.5 µseconds. This 312.5 µseconds is a minimum time unit for call processing and inquiry processing. In the 28-bit counter in which the value is counted up by one every 312.5 µseconds, a period is about 23 hours, thereby raising random characteristic of frequency hopping pattern.

The period of 312.5 µseconds set up with a clock value of 0 bit is a time period of transmission packet when the mater carries out call and inquiry. The period of 625 µseconds set up with a clock value of the first bit is a time period of a slot whose communication frequency is changed. The period of 1.25 m seconds set up with a clock value of the second bit is a transmission/reception time frequency of the master or slave. The period of 1.28 seconds set up with a clock value of the 12th bit is a clock timing in a time period for changing the reception frequency upon inquiry and call.

Each slave adds a specified offset value to its own clock so that it coincides with a clock of the master by referring to the master clock and then, uses the summed clock for communication.

When calculating a frequency hopping pattern in the master and slave, a 48-bit address added to each terminal as well as this clock is used as parameter. The 48-bit address is an absolute address which is defined according to an address system based on the IEEE802 specification and allocated to each terminal of Bluetooth independently. FIG. 19 is a diagram showing an example of structure of this 48-bit address, composed of three parts, in which its lower 24 bits is composed of LAP (Lower Address Part), next 8 bits is composed of UAP (Upper Address Part) and remaining 16 bits are composed of NAP (Non-significant Address Part).

For generation of the frequency hopping pattern synchronous in the pico-net, 24 bits of the entire LAP and lower 4 bits of the UAP in the master address, totaling 28 bits are used. Consequently, a frequency hopping pattern based on the master address is given to each pico-net. Because the master address is notified to the slave when communication status is gained, each slave can calculate the same frequency hopping pattern as the master independently.

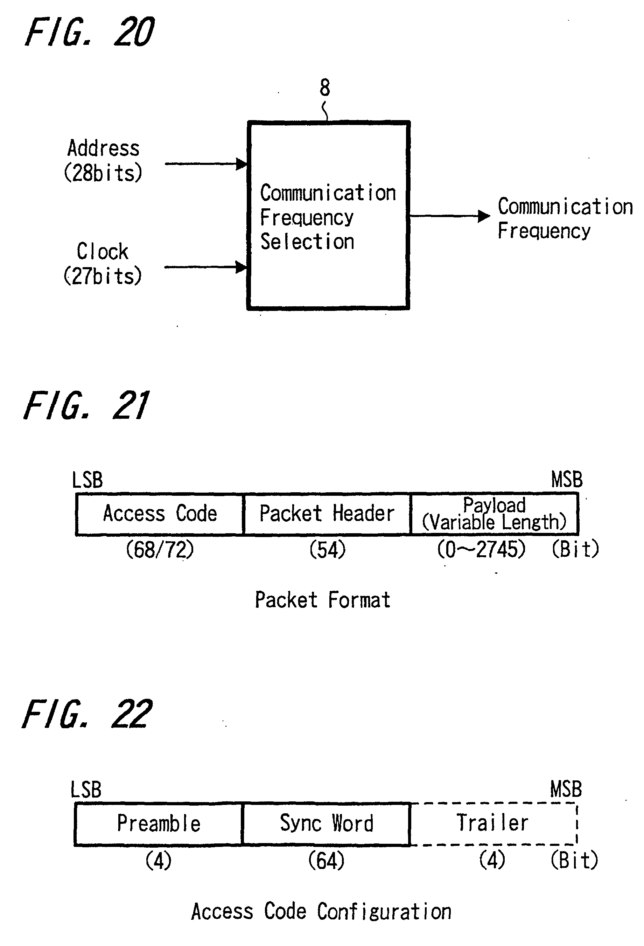

FIG. 20 is a diagram showing an example of the structure for calculating a communication frequency. According to this structure, the low level 28 bits of the master address and low level 27 bits of the 28-bit clock are supplied to a communication frequency selecting portion 8 and a communication frequency which is a channel frequency hopping pattern is automatically determined. The call frequency hopping pattern and the inquiry frequency hopping pattern are different from the channel frequency hopping pattern.

Next, the structure of data to be transmitted between the master and the slave will be described. FIG. 21 is a diagram showing a packet format. The packet is composed of three portions, access code, packet header and payload. The payload is set to a variable length depending on the amount of data to be transmitted at that time.

FIG. 22 is a diagram showing the structure of access code. The access code is composed of 68-bit or 72-bit data, indicating a destination of transmission packet and added to all packets to be transmitted/received. Depending on the kind of packet, only this access code is attached.

Its preamble is composed of a fixed 4-bit length in which a pattern of 1, 0 is repeated depending on the LSB of a sync word. A trailer is composed of 4 bits in which a pattern of 1, 0 is repeated depending on the MSB of the sync word. Any of them functions to remove the signal DC components of the entire access code. The 48-bit sync word is 64-bit data generated from 24-bit LAP in the 48-bit address. This sync word is used to identify the pico-net. In case of transmission in which no master address or clock can be obtained, different sync words may be used in packets for use in inquiry and call.

Next Table 2 summarizes access code types.

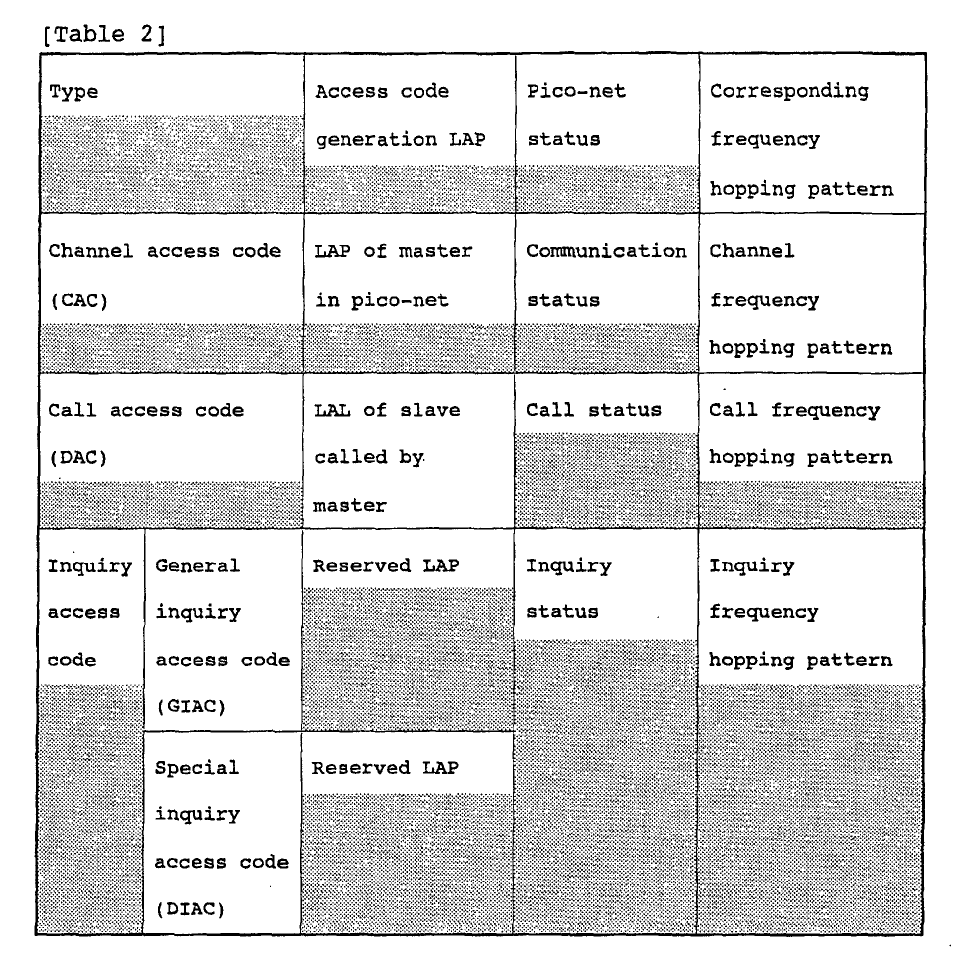

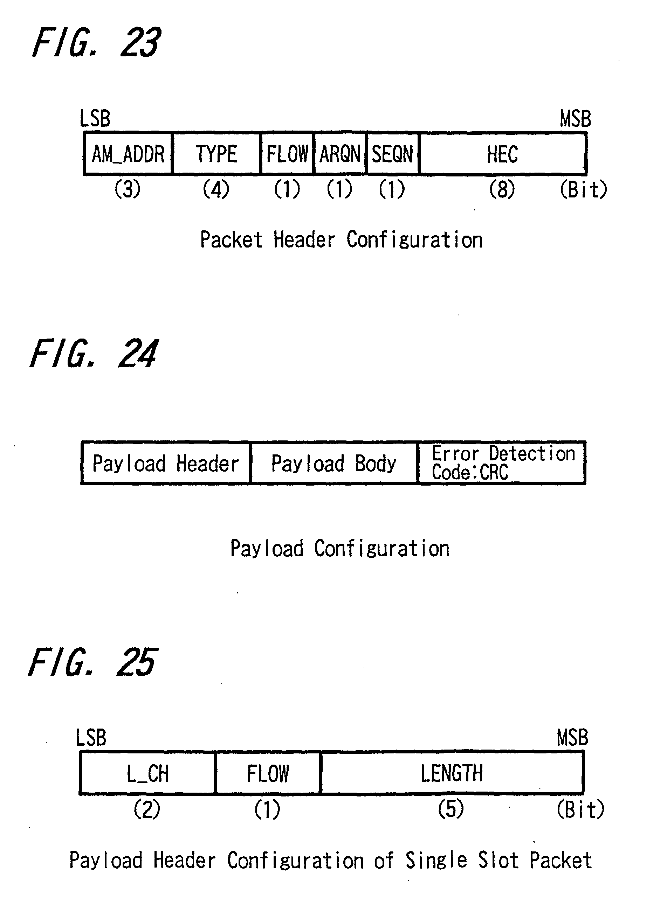

FIG. 23 is a diagram showing the structure of a packet header. The packet header is a portion including a parameter necessary for controlling the communication link in the base band layer.

The 3-bit AM ADDR is an identification field for specifying a slave on communication in the pico-net and a value to be allocated by the mater to each slave.

The 4-bit TYPE is a packet type field for specifying what packet the entire packet is.

The 1-bit FLOW is a field for use in control of flow control of a packet which communicates through the ACL link.

The 1-bit ARQN is a 1-bit field for use in notifying a packet transmission side of whether or not there is any error in a received packet. According to the Bluetooth norm, any response packet specialized for reception confirmation is not prepared and a packet reception confirmation is sent to a packet transmitter using this ARQN field. Depending on whether this field value is 1 or 0, whether or not there is any error in the received packet is notified to the counterpart. Whether or not there is any error in the received packet is determined according to a header error detection code attached to a packet header of the received packet and an error detection code attached to the payload.

The 1-bit SENQ is a field for use for controlling so that the resent packet does not overlap on the reception side. When resending the same packet, the value is inverted between 1 and 0 alternately each time when a packet is transmitted.

The 8-bit HEC is a field in which the packet header error correction code is disposed. This error correction code is generated using a generating polynomial of g(D) = D⁸ + D⁷ + D⁵ + D² + D + 1. Upon generating the error correction code, an initial value set up in an 8-bit shift register for generating error correction code sets up 8 bits of the UAP in an address for Bluetooth described above. The address used here coincides with an address used for generating the access code. The following Table 3 summarizes the initial values when generating this error correction code.

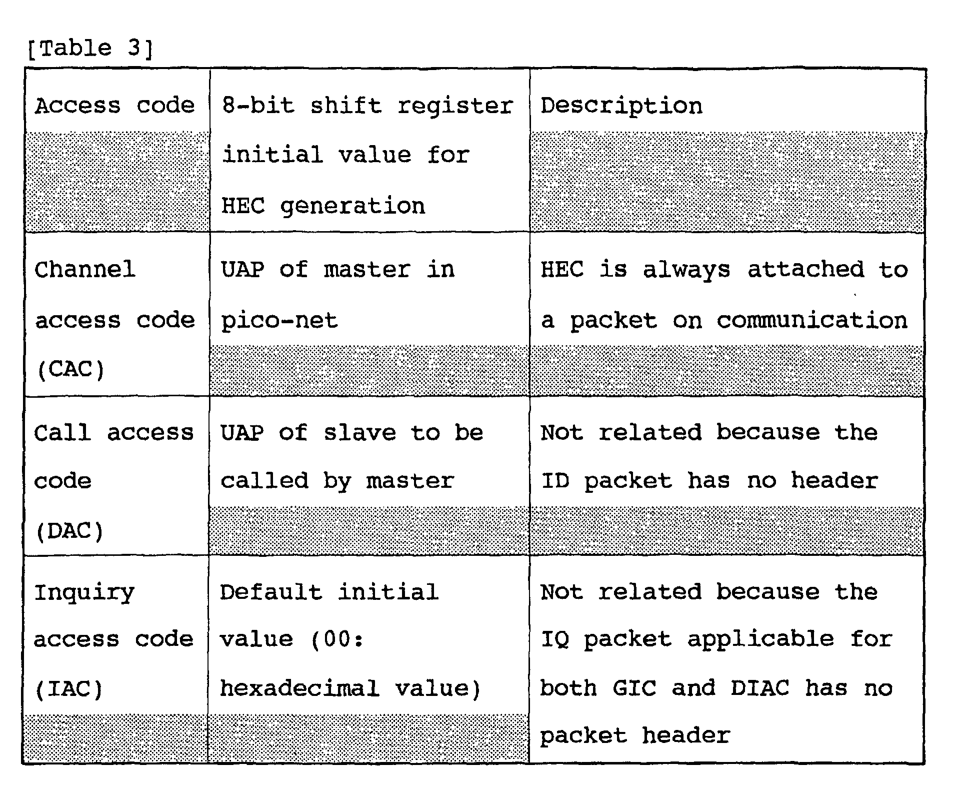

In order to identify a pico-net on communication, a channel access code (CAC) generated according to 24 bits of the LAP of the master address is used. In order to attain synchronism in transmission within the pico-net, it is necessary to synchronize the frequency hopping pattern with the time slot. At this time, even if other master having the same LAP exists nearby and further, the synchronism between the frequency and the time slot happens to coincide, it is possible to remove this by using the HEC which is a packet header error correction code.

The payload accommodates user data or control data to be transmitted or received actually between terminals. The user data includes data to be transmitted or received through the SCO link and data to be transmitted or received through the packet switching type ACL link.

FIG. 24 is a diagram showing the structure of payload of the ACL link. The payload is comprised of three components, payload header, payload body and error detection code and the length of the entire payload is variable. On the other hand, because the payload of the SCO link secures a communication slot cyclically in advance, it does not resend data packet and is composed of only a payload body, while no payload header or error detection code is added.

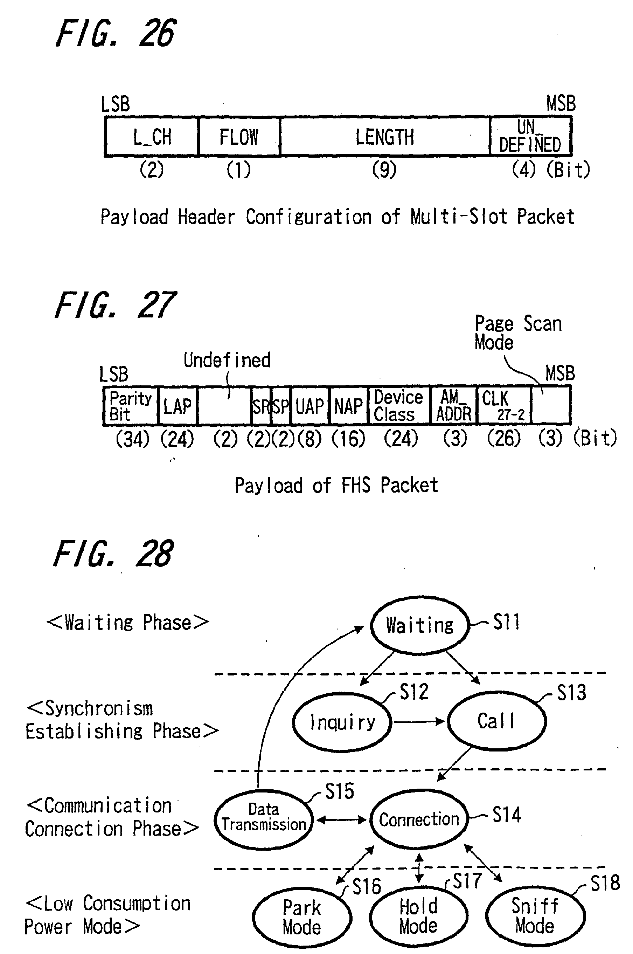

The payload header is a portion including a parameter necessary for controlling data of a higher layer than the base band layer and is data which is included in only the ACL link. FIG. 25 shows the structure of payload header of a single slot packet, and FIG. 26 shows the structure of payload header of a multi-slot packet.

The 2-bit L_CH data included in the payload header is a field for identifying a logical channel for specifying what kind of data the data of a higher layer than the base band layer is. The SCO link and the ACL link are links in the base band layer and the control thereof is carried out according to information set up by the packet header. The L_CH identifies a logical channel which is defined by a higher level layer than the base band layer and is defined as shown in Table 4 for the three user logical channels.

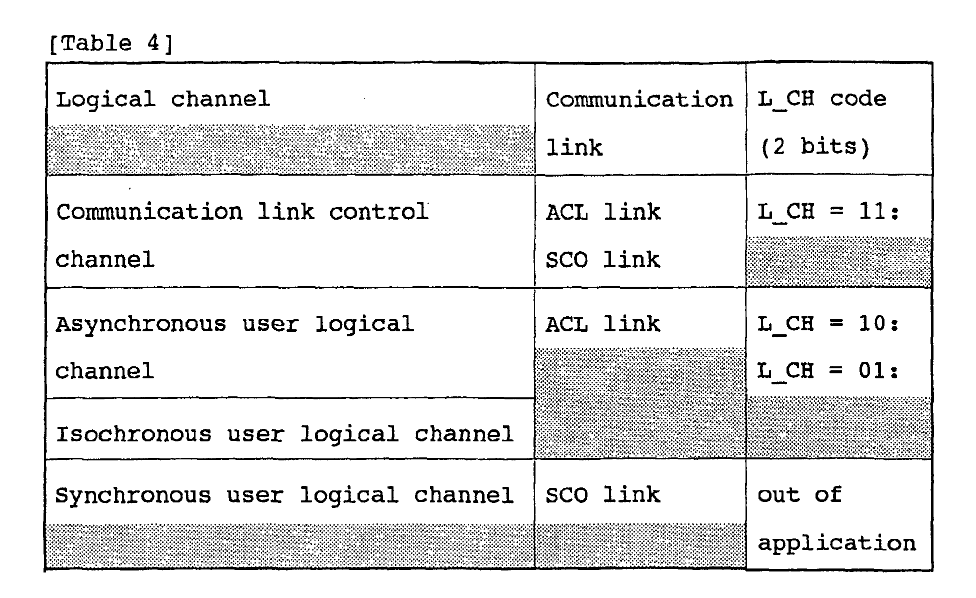

1-bit FLOW is a 1-bit data for use for flow control of data transmitted or received on user logical channel. FLOW is controlled in each user logical channel, so that by setting FLOW = 0 and returning data, a counterpart is made to interrupt transmission of data temporarily. Further, by setting FLOW = 1 and then returning data when the reception buffer is empty, the counterpart is made to restart transmission of data. Although the setting of this FLOW field is executed by the link control layer, real-time data flow control is not guaranteed. The real-time data flow control is all carried out by the base band layer using the FLOW field in the packet header. Because data in the control packet is all processed by the link control layer, it is not transferred to the logical link control layer. Therefore, the control packet is not affected by the flow control by this FLOW and its value is always set to 1.

5-bit or 9-bit LENGTH is a field indicating the data length of a payload body in the unit of byte. This is 5-bit field in case of a single slot packet and 9-bit field in case of a multi-slot packet.

UNDEFINED exists in only the payload header of the multi-slot packet and is currently an undefined field, which is always set to 0.

Data of a length specified by LENGTH of the payload header is accommodated in the payload body. Because the payload of data packet is constructed of only a payload body in SCO link communication, there is no specification of the data length by LENGTH. If the DV packet is used, the data length of that data portion is indicated.

The CRC is a 16-bit field indicating an error detection code and a code for detecting whether or not there is any error in the payload header and payload. This error detection code is generated using a generating polynomial of g(D) = D¹⁶ + D¹² + D⁵ + 1. An initial value to be set in a 16-bit shift register upon its generation is set up to a 16-bit value obtained by adding 8-bit zeroes to 8 bits of the UAP in an address, which has been already described. The address for use here is the same as the address for use in generating the access code like the HEC.

Next, the packet type will be described.

The TYPE field specifies a packet type as described about the packet header. If speaking about this packet type to be set up here, there are a common packet used in the SCO link and ACL link in common and an inherent packet of the SCO link or ACL link.

First, the common packet will be described. The common packet includes NULL packet, POLL packet, FHS packet, DM1 packet, IQ packet and ID packet.

The NULL packet is a packet comprised of an access code and a packet header, having no payload. The length of the packet is fixed to 126 bits. This packet is a packet for transmitting/receiving the status of a communication link and controls packet reception confirmation (ARQN) and flow control (FLOW). A confirmative response of a packet corresponding to the reception of this NULL packet is not required.

The POLL packet is a packet comprised of an access code and a packet header like the NULL packet and fixed to 126 bits so as to control the status of communication link. In case of this POLL packet, when the POLL packet is received, it is necessary to transmit a response about confirmation of the packet even if there is no data to be transmitted, different from the NULL packet.

The FHS packet is an important control packet for achieving synchronism in the pico-net and transmitted when a clock and an address, which are essential parameters for establishing synchronism between the mater and the slave, are exchanged. FIG. 27 is a diagram showing an example of the structure of the payload of the FHS packet. The payload of the FHS packet is comprised of 11 fields and composed of 160 bits by adding a 16-bit error detection code to 144 bits of this 11 fields. The 11 fields composing the FHS packet will be described below.

The 34-bit parity bit is a field including a parity to a sync word in an access code set up by the FHS packet.

The 24-bit LAP is low level 24 bits of an address of a terminal for transmitting the FHS packet. 2 bits following the LAP is an undefined field and set to 0.

The 2-bit SR is a 2-bit field, which upon call, specifies the frequency of repetition for the master to transmit an ID packet string to the slave and the period of scanning for the slave to scan the ID packet string from the master.

The 2-bit SP is a field, which upon inquiry, specifies a time for the slave to execute essential call scanning after the slave receives an IQ packet from the master and transmit the FHS packet to the master.

The 8-bit UAP is high-level 8 bits of an address of a terminal for transmitting the FHS packet.

The 16-bit NAP is 16 bits except LAP and UAP within an address of a terminal for transmitting the FHS packet.

The class of a 24-bit device is a field indicating the kind of terminal.

The 3-bit AM ADDR is a 3-bit field for the master to identify the slave. In the call processing, the master specifies a slave identifier for use in the pico-net through the FHS packet which the master transmits to the slave. In the FHS packet which the slave transmits as a response of IQ packet from the master, AM ADDR is meaningless and needs to be set to 0.

26-bit CLK 27-2 is a field indicating high level 26 bits in a clock possessed by the terminal. This clock has a clock accuracy of 1.25 µseconds and when transmitting the FHS packet, the clock value at that time needs to be set.

3-bit page scan mode is a field for specifying a mode of call scan of default supported by a terminal which transmits the FHS packet.

Next, the DM1 packet will be described. If the DM1 packet is being transmitted or received through the SCO link, it always functions as a control packet. On the other hand, if it is transmitted or received through the ACL link, it not only functions as a control packet but also is used for transmission/reception of data packet.

If it is transmitted as a common packet through the SCO link or ACL link, it is defined as a control packet of the link control layer. When the DM1 packet is transmitted or received through the ACL link, whether it is user packet or control packet cannot be distinguished only by seeing a field (TYPE) for specifying a packet type. Thus, by setting logical channel type field of the payload header to L_CH = 11, it is specified that the DM1 packet is a control packet for the link control layer. In case of data packet, L_CH = 01 or L_CH = 10 is set up by fragmentation of original user data.

The IQ packet is a packet which the master broadcasts corresponding to inquiry and composed of only inquiry access codes.

The ID packet is a packet which upon call, the master transmits by specifying a specific slave and composed of only call access codes. The IQ packet and ID packet are packets not defined by the type field of the packet header.

Next, SCO packet, which is data packet transmitted or received on the SCO link, will be described. The SCO packet is comprised of four kinds, HVI packet, HV2 packet, HV3 packet and DV packet.

The payload of the HV1 packet is composed of only a payload body, which accommodates user data of 10 bytes. Because basically the SCO packet is not resent, this 10 bytes do not contain any error detection code. Then, the data is subjected to error correction coding at 1/3 rate, so that finally it has a payload length of 240 bits.

The payload of the HV2 packet is composed of only a payload body and accommodates 20-byte data. This 20 bytes do not include any error detection code. Then, the data is subjected to error correction coding at 2/3 rate, so that finally, it has a payload length of 240 bits.

The payload of the HV3 packet is composed of only a payload body and accommodates 30-byte data. This 30 bytes do not contain any error detection code. This 30 bytes is not subjected to error correction coding.

The DV packet is comprised of an audio part of a fixed length of 10 bytes and a variable length data part of up to 9 bytes. Although any error correction code is not contained in 10 bytes of the audio part, a 2-byte error detection code for a part of 10 bytes max. expanded from 1-byte payload header is attached to the data part.

The ACL packet transmitted/received on the ACL link includes DM1 packet, DH1 packet, DM3 packet, DH3 packet, DM5 packet, DH5 packet and AUX1 packet.

The payload of the DM1 packet is comprised of 1-byte payload header, a variable length payload body of 17 bytes max. and an error detection code.

The configuration of the DH1 packet is the same as the DM1. However, the payload is not subjected to error correction coding. Therefore, it is capable of transmitting or receiving a variable length data of up to 27 bytes.

The payload of the DM3 packet is comprised of a 2-byte payload header, a variable length payload body of up to 121 bytes and an error correction code. The payload of the DM3 packet is subjected to error correction coding at 2/3 rate.

The configuration of the DH3 packet is the same as that of the DM3 packet. However, the payload is not subjected to error correction coding. Therefore, it is capable of transmitting or receiving a variable length data of up to 183 bytes.

The payload of the DM5 packet is comprised of 2-byte payload header, a variable length payload body of up to 224 bytes and a 2-byte error correction code.

The configuration of the DH5 packet is the same as that of the DM5 packet. However, the payload is not subjected to error correction coding. Therefore, it is capable of transmitting or receiving a variable length data of up to 339 bytes.

The AUX packet is the same as the DH1 packet in case where no 2-byte error detection code is contained. That is, the AUX1 packet is not resent. The payload body is increased by 2 bytes, so that it is capable of transmitting or receiving a variable length data of up to 29 bytes.

Next, transition status based on Bluetooth will be described. The transition status of this method is composed of three phases relating to transmission and low consumption power mode relating to power consumption at a terminal. The three phases relating to transmission is divided to waiting phase, synchronism establishing phase and transmission phase. Further, the low consumption power mode is divided to three types, park mode, hold mode and sniff mode. FIG. 28 is a diagram showing a status transition and there are transitions indicated with arrows.

The waiting phase (S11) is composed of a processing condition and a phase in which no packet is transmitted or received. Just after a terminal is powered on or when communication link is cut out, the terminal is kept in the waiting phase. In this waiting phase, the roles of the master and the slave are not different.

The synchronism establishing phase is composed of two kinds, inquiry (S12) and call (S13).

The inquiry is a first stage processing condition for establishing synchronism in the pico-net. A terminal intending to transmit for the first time is always transferred to inquiry after the waiting phase.

The call is a second stage processing condition for establishing synchronism in the pico-net. Although basically, that condition is attained from the inquiry, if the first stage processing for establishing synchronism in the pico-net with the inquiry condition is already completed, the call may be attained directly from the waiting phase.

In this inquiry, the roles of the master and the slave are clearly different. The master in this processing condition broadcasts IQ packets continuously irrespective of whether or not a slave exists nearby. If a slave in the inquiry condition exists nearby, the slave transmits the FHS packet to the master in order to notify its attribution each time when it receives the IQ packet. Through this FHS packet, the master is capable of knowing an address and a clock of the slave.

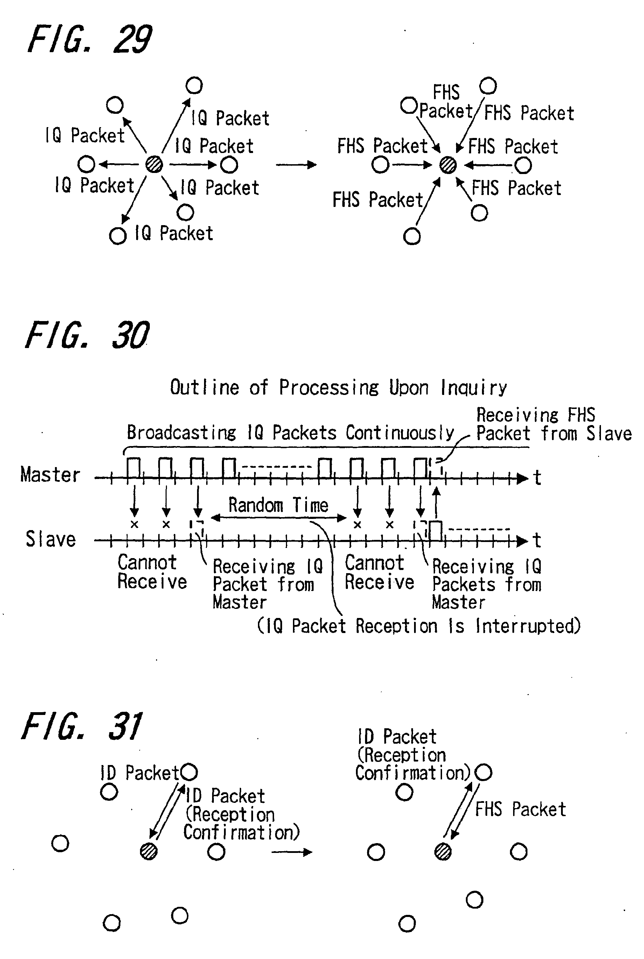

FIG. 29 is a diagram showing a processing which the master and slave in this inquiry condition carry out. If as shown on the left of FIG. 29, the master in the center transmits the IQ packet, a surrounding slave transmits the FHS packet to the master as shown on the right of FIG. 29. The master in the inquiry condition receives the FHS packet from unspecified plural slaves.

Here, a fact that plural slaves transmit the FHS packets to a specific IQ packet at the same time is a problem. If plural FHS packets are transmitted at the same time, a collision of the packets occurs so that the master cannot distinguish the transmitted FHS packets. According to Bluetooth, random time is backed off when transmitting the FHS packet in order to avoid such a collision. That is, the slave does not transmit the FHS packet to the master with respect to the IQ packet received for the first time and after that, interrupts reception of the IQ packet while the random time is backed off. After that, the slave restarts reception of the IQ packet and next, just after the IQ packet is received, transmits the FHS packet to the master. If the slave receives the FHS packet, it interrupts the reception of the IQ packet again while the random time is backed off. After that, this action is repeated.

FIG. 30 is a diagram showing an outline of processing in the master and slave upon the inquiry. Because the master does not notify the slave that it has received the FHS packet without any error, the slave in the inquiry condition remains in a state just after the FHS packet is transmitted. However, because the same IQ packet is broadcasted repeatedly for a specified interval of time, the master receives plural FHS packets for each slave in the inquiry condition. That is, by continuing the inquiry for a specified interval of time, certainty of transmission/reception of FHS packets is intensified.

In case of the call, the roles of the master and slave are different. With this processing condition, the master selects a slave scheduled to communicate with based on information of the FHS packet transmitted/received in the inquiry and transmits the ID packet to that slave. If the master confirms the reception of the ID packet, it transmits the FHS packet to that slave. Consequently, the slave can know the address and clock of the master.

As an access code to the ID packet and FHS packet to be transmitted/received here, the call access code is used.

FIG. 31 shows an outline of processing operation carried out by the master and slave in the call condition. If the master located in the center transmits the ID packet to the slave as shown on the left of FIG. 31, the slave notifies of reception confirmation. Further, if the master transmits the FHS packet to the slave as shown on the right of FIG. 31, the slave notifies of reception confirmation.

Different from a processing of unspecified plural slaves upon inquiry, processing is exchanged between a specified slave and master upon inquiry. Because transmission and reception of the packet can be carried out one to one, the master and slave can execute processing while confirming the transmission and reception.

After receiving the ID packet from the master, the slave transmits the same ID packet to the master so as to notify of reception confirmation. Next, the master transmits the FHS packet to the slave so as to notify the slave of its own address and clock. If the slave receives this FHS packet without any error, it transmits the ID packet to the master so as to confirm the reception. At this time, information about the address and clock necessary for synchronism in the pico-net is exchanged between the master and the slave together with the inquiry processing.

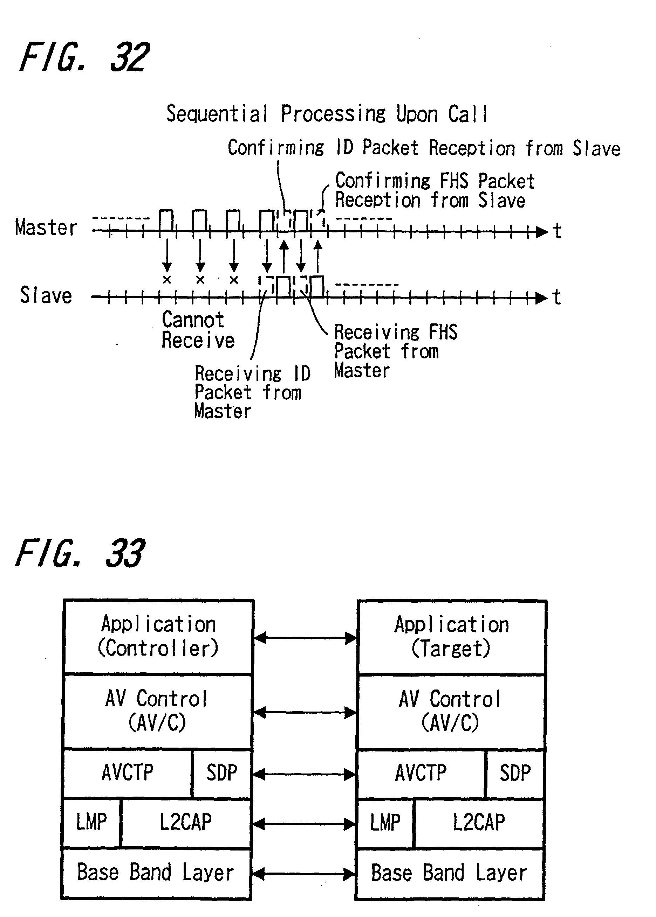

FIG. 32 is a diagram showing an example of processing between the master and the slave upon call.

The communication connection phase shown in the status transition diagram of FIG. 28 includes connection (S14) and data transfer (S15). Because in this communication connection phase, the master is synchronous with the slave in the pico-net after synchronism establishing phase, this allows actual communication to be executed. In the connection status, transmission/reception of data packet is not carried out. Those transmitted/received at this time are restricted to control packet for setting communication link, control packet relating to security and control packet relating to low consumption power mode.

On the other hand, in data transfer status, transmission/reception of data packet is permitted. If the status is changed to connection for the first time after the synchronism establishing phase, basically it cannot be changed to data transmission unless processings for connection certification and coding between the master and slave are completed. The roles of the master and slave on connection are different depending on the content of control packet to be controlled there.

Transmission and reception of data packet on data transfer are carried out according to rules of the master, slave and time slot. If a terminal relating to data transmission cuts out communication or a controller in a terminal is reset in terms of hardware, the terminal is turned from data transmission state to waiting state.

The low consumption power mode refers to a mode for providing low consumption power status of a terminal which is turned from connection state. This low consumption power mode is divided to three types, park mode (S16), hold mode (S17) and sniff mode (S18).

The park mode is a mode specific to the slave and is a low consumption power mode which maintains synchronism in the pico-net established by connection.

The hold mode is a low consumption power mode which both the master and the slave can turn to and is a mode which maintains synchronism in the pico-net established by connection and in case of the slave, holds a slave identifier given by the master.

The sniff mode is a low consumption power mode specific to the slave and is a mode in which the slave maintains synchronism in the pico-net established by connection like in case of the hold mode and holds a slave identifier given by the master.

Under Bluetooth, it is possible to switch between a master and a specified slave in the pico-net.

Processing about security to be carried out with the communication connection phase being connected is largely divided to certification and coding. Certification processing refers to determining whether or not connection between itself and a specified counterpart is permitted. Coding processing refers to protecting data which is being transmitted from being tapped by a third party.

The security of Bluetooth is controlled under a concept of link key. The link key refers to a parameter for controlling one-to-one security between specified two terminals. This link key must not be disclosed to the third party.

As this link key, an initialization key for use between terminals which try to connect each other for the first time is used. If a link key is set up in the data base as parameter by connecting previously, that set up link key is used. The initialization key is generated using a PIN code from a higher level application and data generated internally.

General processing based on the Bluetooth norm has been described up to here. In the short-distance wireless communication of this example, a command for controlling such an electronic device as audio device and video device (these devices are generally called AV devices) and a response are transmitted.

FIG. 33 is a diagram showing configuration of transmission for transmitting this command and response with a hierarchical structure. A terminal on command transmission side is called controller while a terminal which receives that command and sends back a response to the command transmitter is called target. The relation between this controller and target is other concept than the master and slave relation described above, which is necessary for carrying out communication connection control and basically, either may function as a terminal of the master or slave.

A layer for processing L2CAP packet for transmitting protocol data for control exists on the base band layer and AVCTP (Audio/Video Control Transport Protocol) is prepared further thereon. A protocol called AV/C command is prepared on that protocol in order to control the AV device.

FIG. 8 is an example of data structure of the L2CAP packet for transmitting data of that protocol. A header is attached to a heading portion of a payload section of this packet (portion marked with L2CAP Header), indicating data length (length) and channel ID. A subsequent section is actual information (information).

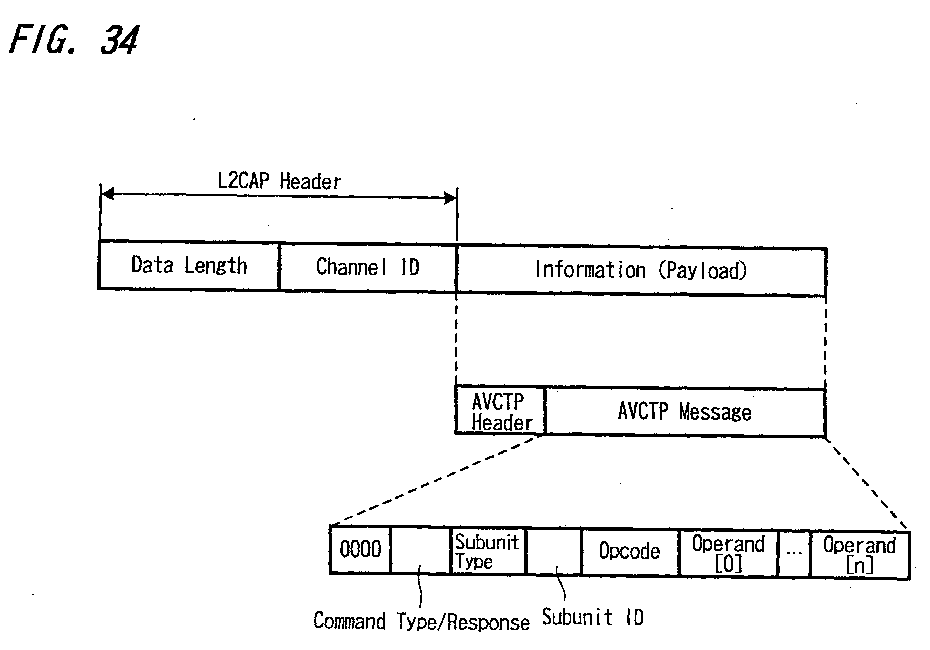

AVCTP header and AVCTV message are disposed in the information section. The AVCTP message data comprises "0000" data (4 bits) indicating AV/C data, command type/response data (4 bits) indicating a command type and a response type, data (5 bits) indicating subunit type, data (3 bits) indicating subunit ID, opcode (opcode) data (8 bits) specifying a function and operands which are data attached to the functions (operand : 8 bits), operand [0], operand [1], ....operand [n] (n is an arbitrary integer) . To the data structure of the AVCTP shown in FIG. 34 is applied a data structure specified as AV/C command set which is a standard for transmitting device control data on a network connected through a cable-based bus line.

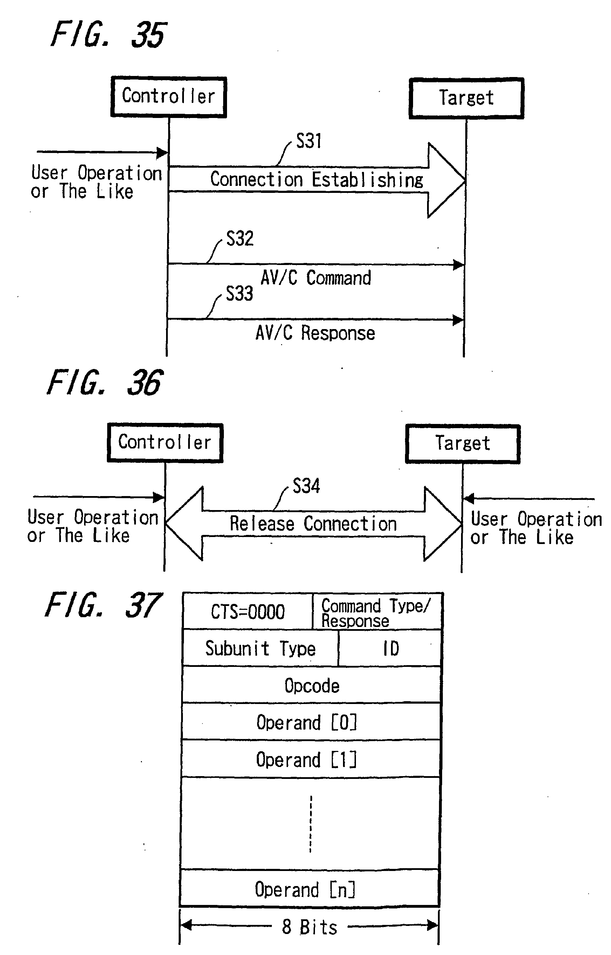

FIG. 35 is a diagram showing a condition in which a command and a response are transmitted by wireless between the controller and the target. If there is any user at the terminal of the controller side so that the necessity of transmitting a command to a target device occurs, the controller establishes a connection with the target (step S31) and transmits the AV/C command from the controller to the target through the established connection (step S32). The target receiving this command transmits a response to that command to the controller (step S33). Then, a processing corresponding to the command is executed by the target as required. In case of a command for confirming the status of the target, a required data is sent back to the controller as a response.

If a processing for removing the connection is executed by user operation on the controller side or user operation on the target side as shown in FIG. 36, release connection processing for removing the connection set up to transmit the command or response is executed (step S34).

Next, the structure of the AV/C command set (that is, AVCTP data) for use in the system of this example will be described with reference to FIGS. 37 to 47. FIG. 37 indicates the data structure of a section to be transmitted as the AV/C command (that is, AVCTP data in case of this example) in the unit of 8 bits. The AV/C command set is a command set to control an AV device and CTS (command set ID) is "0000". The AV/C command frame and response frame are exchanged. A response to a command is sent for example, within a specified period. However, in some case, a temporary response is sent within the specified period and then a formal response is sent after some extent of interval.

CTS indicates a command set ID and in case of the AV/C command set, CTS is "0000". The field of the C type/response (ctyope/response) indicates a command functional type if the packet is a command and indicates a command processing result if the packet is a response. The command is largely divided to the following four types and they are (1) command (CONTROL) for controlling the function from the outside, (2) command (STATUS) for inquiring about a status from the outside, (3) command (GENERAL INQUIRY (presence/absence of support of opcode) and SPECIFIC INQUIRY (presence/absence of support of opcode and operand)) for inquiring about presence/absence of support of control command from the outside, (4) command (NOTIFY) for requiring to notify the outside of a status change.

The response is returned depending on the kind of the command. A response corresponding to control (CONTROL) command is "not implemented" (NOT IMPLEMENTED), "accepted" (ACCEPTED), "rejected" (REJECTED), or "interim" (INTERIM). A response to the status (STATUS) command is "not implemented" (NOT IMPLEMENTED), "rejected" (REJECTED), "in transition" (IN TRANSITION), or "stable" (STABLE). A response to a command for inquiring about presence/absence of support of a command from the outside (GENERAL INQUIRY and SPECIFIC INQUIRY) is " implemented" (IMPLEMENTED) or "not implemented" (NOT IMPLEMENTED). A response to a command (NOTIFY) for requesting to notify the outside of the status change is "not implemented" (NOT IMPLEMENTED), "rejected" (REJECTED), "interim" (INTERIM) or "changed" (CHANGED).

The subunit type is provided to specify the function in a device and allocated to, for example, tape recorder/player, tuner and the like. As for this subunit type, BBS (bulletin board subunit), which is a subunit for publicizing information to other devices, is also allocated as well as the functions corresponding to devices. In order to distinguish the subunit if there are plural subunits of the same type, addressing is carried out with subunit id, which is an identification number. Opcode, which is an operation code, indicates a command while operand indicates a command parameter. A field to be added as required (additional operands) is also prepared. Such data as 0 data is added after operand as required.

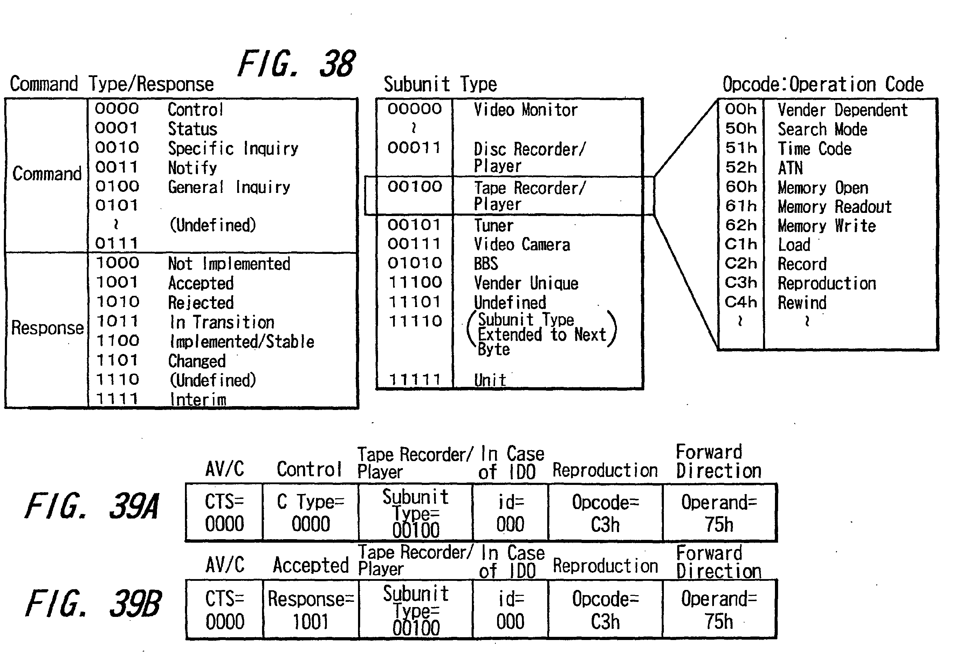

FIG. 38 shows an example of the AV/C command. The left side of FIG. 38 shows an example of command type/response. An upper section of the Figure indicates commands while a lower section indicates responses. Control (CONTROL) is allocated to "0000", status (STATUS) is allocated to "0001", specific inquiry (SPECIFIC INQUIRY) is allocated to "0010", notify (NOTIFY) is allocated to "0011" and general inquiry (GENERAL INQUIRY) is allocated to "0100". "0101" and "0111" are reserved for future specification. Not implemented (NOT IMPLEMENTED) is allocated to "1000", accepted (ACCEPTED) is allocated to "1001", rejected (REJECTED) is allocated to "1010", in transition (IN TRANSITION) is allocated to "1011", implemented (IMPLEMENTED/STABLE) is allocated to "1100", changed (CHANGED) is allocated to "1101", interim (INTERIM) is allocated to "1111". "1110" is reserved for future specification.

The center of FIG. 38 indicates an example of subunit type. video monitor is allocated to "00000", disc recorder/player is allocated to "00011", tape recorder/player is allocated to "00100", tuner is allocated to "00101", video camera is allocated to "00111", a subunit for use as a bulletin board called BBS (Bulletin Board Subunit) is allocated to "01010", a subunit type specific to manufacturer (Vender unique) is allocated to "11100" and a specific subunit type (subunit type extended to next byte) is allocated to "11110". Meanwhile, a unit is allocated to "11111" and used for transmission to a device itself, including, for example, power ON/OFF.

The right side of FIG. 38 shows an example of opcode (operation code: opcode). An opcode table exists for each subunit type and this indicates an opcode of a case where the subunit type is tape recorder/player. Further, operand is defined for each opcode. Here, a value specific to manufacturer (Vender dependent) is allocated to "00h", search mode is allocated to "50h", time code is allocated to "51h", ATN is allocated to "52h", open memory is allocated to "60h", memory readout is allocated to "61h", memory write is allocated to "62h", load is allocated to "C1h", record is allocated to "C2h", reproduction is allocated to "C3h", and rewind is allocated to "C4h".

FIG. 39 shows an example of the AV/C command and response. For example, if a reproduction instruction is given to a reproducing device as a target (consumer), the controller transmits a command indicated in FIG. 39A to the target. Because this command uses AV/C command set, it comes that CTS = "0000". Because the command type (ctype) uses a command for controlling a device from the outside (CONTROL), c type = "0000" (see FIG. 38). Because the subunit type is tape recorder/player, subunit type is "00100" (see FIG. 38). Because id indicates a case of ID0, id = 000. The opcode is "C3h" meaning reproduction (see FIG. 38). The operand is "75h" meaning a forward direction (FORWARD). Then, after reproduced, the target sends back a response as shown in FIG. 39B to the controller. Here, because "accepted" (accepted) is a response, the response is "1001" (see FIG. 38). Others are the same as FIG. 39A except the response and therefore a description thereof is omitted.

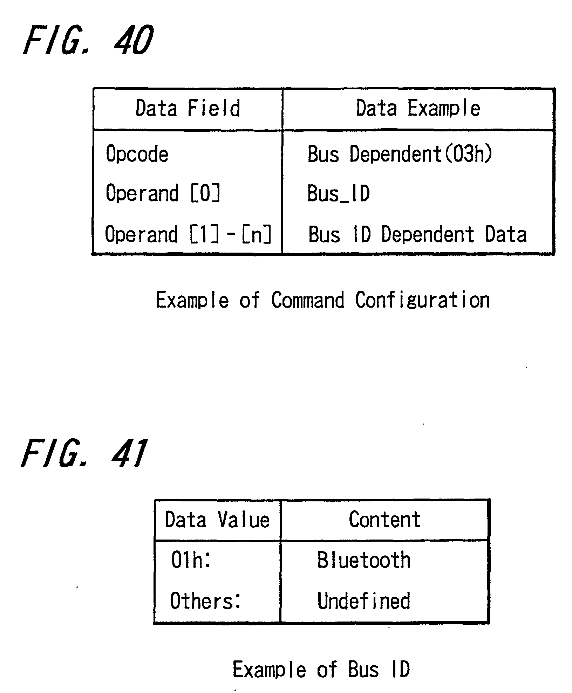

Although the AV/C command set configuration already specified is applied up to here, in this example, the configuration shown in FIG. 34 is set up as data of the AVCTP as follows, in order to transmit data specific to wireless network based on Bluetooth. That is, as shown in FIG. 40, as for the command structure, bus dependent (BUS DEPENDENT) data is disposed in opcode as the highest level data. Bus ID is disposed in operand [0] and data relating to bus ID (bus ID dependent data) is disposed in an interval subsequent to the operand [1].

As the bus ID, a value (01h) specific to the Bluetooth norm is allocated as shown in FIG. 41. Other values are undefined.

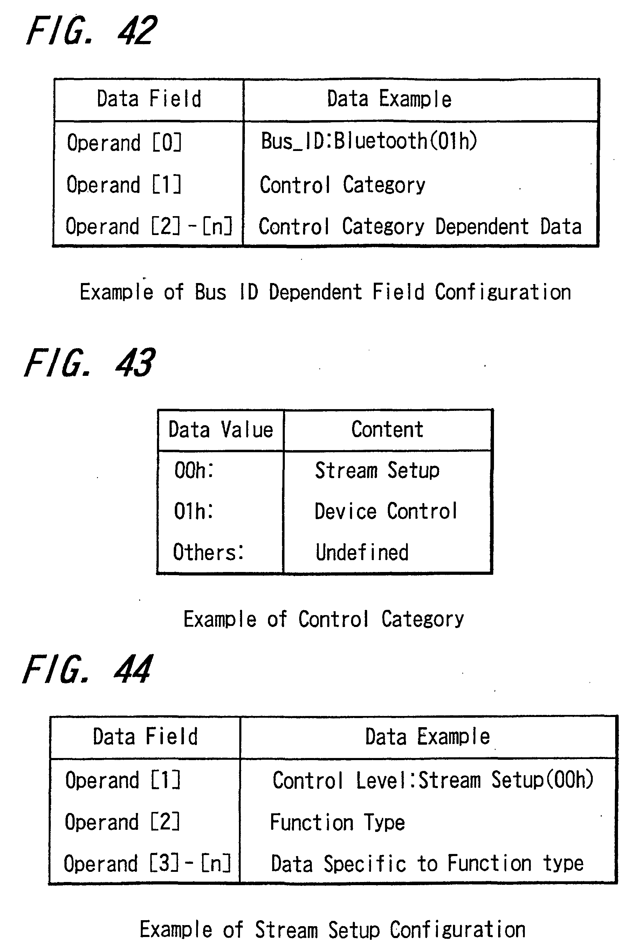

As data relating to the bus ID (bus ID dependent data), control category (control category) data indicating a control type is disposed in a section of the operand [1] as shown in FIG. 42. Then, data related to control category (control category dependent data) is disposed in a section subsequent to the operand [2].

As for the control category data, as shown in FIG. 43 for example, stream setup (stream setup) indicating setup for stream data transmission is allocated in the value 00h and device control (device control) for controlling a device (device) is allocated in the value 01h. The other values are undefined.

FIG. 44 shows an example of data structure in case of stream setup. The section of operand [1] is control level and here, the value is 00, indicating stream setup. The section of operand [2] is function type and data relating to function type is disposed in section subsequent to the operand [3].

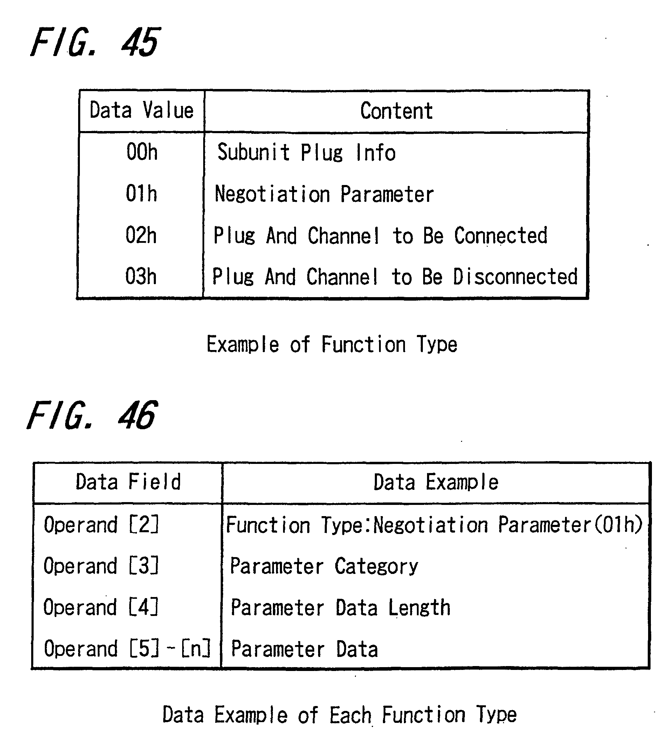

As for the function type, data shown in FIG. 45, for example, is set up. For example, subunit plug info, which is data relating to subunit plug, parameter relating to negotiation, data of plug and channel to be connected and data of plug and channel to be disconnected are set up.

FIG. 46 shows an example of data of each function type. This is an example of parameter relating to negotiation and the section of the operand [2] is appropriate data, the section of the operand [3] is parameter category, the section of the operand [4] is parameter data length, and the section subsequent to the operand [5] is data about actual setting condition of a category indicated in the section of the operand [3].

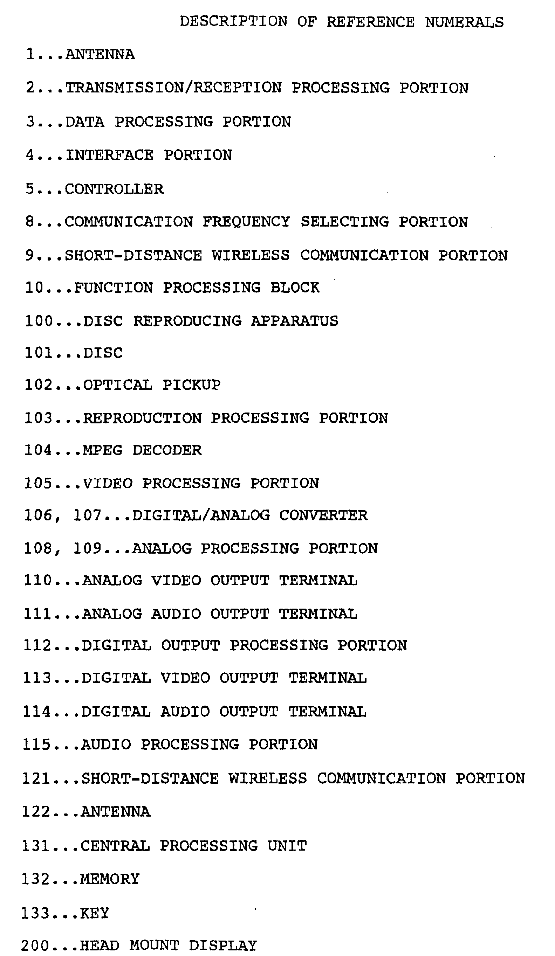

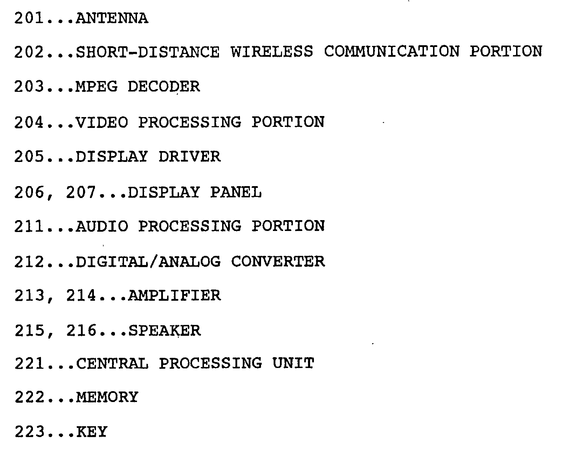

The parameter category in the section of the operand [3] is set up as shown in FIG. 48. The value 00h indicates parameters of all categories. The value 01h indicates an audio modulation type parameter which can be processed. The value 02h indicates a video modulation type parameter which can be processed. The value 03h indicates that audio data and video data are transmitted in a set as stream. The value 04h indicates an allowance of bit error rate. The value 05h indicates an allowance of packet error rate. The value 06h indicates an allowance of delay time. The value 07h indicates a transmission band. The value 08h indicates data about copy restriction of stream data. Meanwhile, data about copy restriction may be transmitted as other function type data.

By transmitting data about transmission setting of stream data in the form of AVCTP data, stream data such as audio data and video data can be transmitted favorably through wireless network standardized as Bluetooth. Stream data is transmitted through other logical channel than for AVCTP data. By transmitting various commands and responses described above as AVCTP data, it is possible to control the device and know the status of the device.

Although the above-described embodiment uses a case where data transmission is carried out through network which transmits data by wireless according to Bluetooth, it is needless to say that the present invention may be applied to a case where the same kind of control data is transmitted through other wireless communication network.

Although an example in which wireless communication network is employed as transmission network has been described, the similar transmission processing may be carried out using cable-based transmission network.

By transmitting a command and its response of a specified type through a transmission network such as wireless communication network as described above, remote control of a device which receives a command can be carried out from a device which sends that command while confirming with a response. Consequently, high level device control is enabled using for example, a short-distance wireless network.

In this case, because a code for specifying a network is attached to data of a specified type, it can be applied to existing various types of wireless communication networks such as Bluetooth.

Further, by attaching various kinds of data about control to the data of specified type, various kinds of control are enabled. For example, by providing data about transmission setup of stream data and data about device control as data by type to control, various kinds of setups of stream data transmission and various controls of devices can be carried out securely.

Further, because when data about transmission setup of stream data is added and transmission of stream data is instructed, transmission of the appropriate stream data is carried out through a second channel in the network, the command/response and stream data are transmitted through different channels, so that each transmission can be carried out securely.

### INDUSTRIAL APPLICABILITY

According to the data communication method and data transmitting apparatus of the present invention, it is possible to build up a system enabling remote control of devices in a network by constructing a wireless communication network for carrying out wireless communication among, for example, audio devices or video devices.

## Claims

1. A data communication method for transmitting a command and its response of a specified type between a device and other device which are capable of transmitting data bi-directionally in a specified wireless or cable-based transmission network,
wherein a side receiving said command executes an action instructed by the command.

2. The data communication method as claimed in claim 1, wherein a code for specifying said network is attached to data of said command and response.

3. The data communication method as claimed in claim 2, wherein data by type to control is attached to data of said command and response.

4. The data communication method as claimed in claim 3, wherein as said data by type to control, data about transmission setup of stream data and data about device control exist.

5. The data communication method as claimed in claim 4, wherein when data about transmission setup of said stream data is attached and transmission of stream data is instructed, transmission of an appropriate stream data is carried out through a second channel in said network.

6. A data transmitting apparatus connected to a specified wireless or cable-based transmission network, comprising:
a control means for generating a command and a response of a specified type; and
a transmitting means for transmitting a descriptor type command and response generated by said control means through a first channel of said network.

7. The data transmitting apparatus as claimed in claim 6, wherein a code for specifying said network is attached to data of a command or a response generated by said control means.

8. The data transmitting apparatus as claimed in claim 7, wherein data by type to control is attached to data of a command or a response generated by said control means.

9. The data transmitting apparatus as claimed in claim 8, wherein data by type to control generated by said control means is any one of two types of data, data about transmission setup of stream data and data about device control.

10. The data transmission apparatus as claimed in claim 9, wherein when data about transmission setup of stream data is attached to data of the command or the response generated by said control means, transmission of stream data is instructed and then a setup based on the instruction is completed, said transmitting means executes transmission of said stream data through the second channel of said network.
